# EUROPEAN PATENT SPECIFICATION

(11) **EP 2 966 895 B1**
(45) Date of publication and mention of the grant of the patent: **06.06.2018**
(21) Application number: 13880461.2
(22) Date of filing: 26.03.2013
(51) Int. Cl.: H04W 4/08, H04W 4/00, H04W 76/04

(54) **METHOD AND SYSTEM FOR TRANSMITTING DATA PACKET, TERMINAL DEVICE AND NETWORK DEVICE**
VERFAHREN UND SYSTEM ZUR ÜBERTRAGUNG VON DATENPAKETEN, ENDGERÄTEVORRICHTUNG UND NETZWERKVORRICHTUNG
PROCÉDÉ ET SYSTÈME DE TRANSMISSION DE PAQUET DE DONNÉES, DISPOSITIF TERMINAL ET DISPOSITIF DE RÉSEAU

(43) Date of publication of application: 13.01.2016
(73) Proprietor: Huawei Technologies Co., Ltd., Longgang District Shenzhen, Guangdong 518129 (CN)
(72) Inventor: HU, Zhenxing, Shenzhen Guangdong 518129 (CN); ZHANG, Jian, Shenzhen Guangdong 518129 (CN); QUAN, Wei, Shenzhen Guangdong 518129 (CN)
(74) Representative: Thun, Clemens
(86) International application number: PCT/CN2013/073202
(87) International publication number: WO 2014/153721

(56) References cited:
- WO-A2-2013/028026
- CN-A- 102 158 901
- CN-A- 102 957 500
- US-A1- 2013 016 602
- HITACHI: "Online Small Data Transfer using NAS", 3GPP DRAFT; S2-113043_SMALL_DATA_TRANSMISSION_OVER_NAS , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 4 July 2011 (2011-07-04), XP050548303, [retrieved on 2011-07-04]
- QUALCOMM INCORPORATED: "Common Iu/S1 for Connectionless Data Transmission", 3GPP DRAFT; S2-130328_MTCE-SDDTE-COMMON IU S1 V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Prague, Czech; 20130128 - 20130201 22 January 2013 (2013-01-22), XP050684868, Retrieved from the Internet: URL:http://www.3gpp.org/ftp/tsg_sa/WG2_Arc h/TSGS2_95_Prague/Docs/ [retrieved on 2013-01-22]
- SAMSUNG: "Small data detection for SDDTE", 3GPP DRAFT; S2-123622_SDDTE_SMALL DATA DETECTION_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 2 October 2012 (2012-10-02), XP050683350, Retrieved from the Internet: URL:http://www.3gpp.org/ftp/tsg_sa/WG2_Arc h/TSGS2_93_Sofia/Docs/ [retrieved on 2012-10-02]
- INTERDIGITAL COMMUNICATION CORPORATION: "Group based RAB & IP assignment for TS 22.368", 3GPP DRAFT; S1-100140 (M2M_GROUPBASEDRAB&IP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. SanFrancisco; 20100222, 10 February 2010 (2010-02-10), XP050431630, [retrieved on 2010-02-10]
- "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 22 September 2010 (2010-09-22) , pages 1-80, XP050442131, [retrieved on 2010-09-22]

## Description

### TECHNICAL FIELD

The present invention relates to the field of communications technologies, and in particular, to a data packet transmission method and system, a terminal device and a network device.

### BACKGROUND

In a communications technology network such as the Internet of Things, when data is transmitted, a terminal device sends a small data packet, that is, a data packet of a relatively small data amount, for example, an intelligent meter reading terminal discontinuously sends information about a meter, such as a reading.

In the prior art, a terminal device individually transmits a small data packet, and before transmitting the small data packet, the terminal device needs to perform multiple types of signaling interaction with a network device, such as resource configuration and negotiation about transmission information. In this way, relatively many system resources are occupied, and data transmission efficiency is relatively low. Currently, a small data packet transmission mechanism is put forward, for example, a data packet is transmitted by using radio bearer signaling, or a terminal device is kept always in a connected state to transmit a data packet. In this way, data packet transmission efficiency can be improved, and the terminal device can transmit a data packet at any time by using the small data packet transmission mechanism, and as a result, the terminal device abuses the small data packet transmission mechanism.

Small data transfer mechanisms as explained above are for example suggested in: HITACHI, "Online Small Data Transfer using NAS", 3GPP DRAFT; S2-113043_SMALL_DATA_TRANSMISSION_OVER_NAS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20110704), vol. SA WG2, no. Naantali; 20110711;
QUALCOMM INCORPORATED, "Common Iu/Sl for Connectionless Data Transmission", vol. SA WG2, no. Prague, Czech; 20130128 - 20130201, (20130122), 3GPP DRAFT; S2-130328_MTCE-SDDTE-COMMON IU S1 VI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE; or
SAMSUNG, "Small data detection for SDDTE", vol. SA WG2, (20121002), 3GPP DRAFT; S2-123622_SDDTE_SMALL DATA DETECTION_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE.

Further, INTERDIGITAL COMMUNICATION CORPORATION, "Group based RAB & IP assignment for TS 22.368", 3GPP DRAFT; S1-100140 (M2M_GROUPBASEDRAB&IP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, suggests that MTC devices in a group can reuse the same radio resources and IP address for data communication. "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discloses a method for handling MTC congestion/overload traffic.

### SUMMARY

Embodiments of the present invention provide a data packet transmission method and system, a terminal device and a network device, which can control a terminal device to transmit a data packet by using a small data packet transmission mechanism, wherein the inventive concept allows to allow or restrict the small data packet transmission in an efficient way.

According to a first aspect, a data packet transmission method is provided, including:
receiving, by a network device, a data packet or small data transmission indication information that is sent by a terminal device;
determining, by the network device, whether the terminal device can transmit the data packet according to a small data packet transmission mechanism; and
sending, by the network device, first indication information used for indicating whether the terminal device can transmit the data packet by using the small data packet transmission mechanism;
wherein the determining whether the terminal device can transmit the data packet according to a small data packet transmission mechanism comprises: determining, according to a condition on which the small data packet transmission mechanism is used, whether the terminal device can transmit the data packet by using the small data packet transmission mechanism,
wherein the condition comprises any one or more of the following:
   a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the receiving a data packet or small data transmission indication information that is sent by a terminal device comprises: receiving a radio resource control connection request message sent by the terminal device, wherein the radio resource control connection request message carries the small data transmission indication information; and
wherein if it is determined that the terminal device cannot transmit the data packet by using the small data packet transmission mechanism, the sending first indication information used for indicating whether the terminal device can transmit the data packet by using the small data packet transmission mechanism comprises: sending a radio resource control connection setup message, so as to instruct the terminal device to transmit the data packet in a second transmission manner.

In a first possible implementation manner of the first aspect, the pre-configured attribute information includes at least one of a source IP address, a source port, a destination IP address, a destination port and a transport layer protocol number of the data packet.

According to a second aspect, a data packet transmission method is provided, including:
sending, by a terminal device, a data packet or small data transmission indication information to a network device; and
receiving, by the terminal device, first indication information that is returned by the network device according to a condition on which the data packet is transmitted by using a small data packet transmission mechanism, and transmitting the data packet according to the first indication information, wherein the first indication information is used for indicating whether the terminal device can transmit the data packet by using the small data packet transmission mechanism,
wherein the condition comprises any one or more of the following:
   a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
and wherein the sending a data packet or small data transmission indication information to a network device comprises: sending a radio resource control connection request message to the network device, wherein the radio resource control connection request message carries the small data transmission indication information; and
wherein if it is determined that the terminal device cannot transmit the data packet by using the small data packet transmission mechanism, the receiving first indication information used for indicating whether the terminal device can transmit the data packet by using the small data packet transmission mechanism comprises: receiving a radio resource control connection setup message, so as to instruct the terminal device to transmit the data packet in a second transmission manner.

In a first possible implementation manner of the second aspect, the pre-configured attribute information includes at least one of a source IP address, a source port, a destination IP address, a destination port and a transport layer protocol number of the data packet.

According to a third aspect, a network device is provided, including:
a receiving unit, configured to receive a data packet or small data transmission indication information that is sent by a terminal device;
a transmission determining unit, configured to determine whether the terminal device can transmit the data packet according to a small data packet transmission mechanism; and
a first indication sending unit, configured to send, according to a determining result of the transmission determining unit, first indication information used for indicating whether the terminal device can transmit the data packet by using the small data packet transmission mechanism;
wherein the transmission determining unit is specifically configured to determine, in the following manner, whether the terminal device can transmit the data packet by using the small data packet transmission mechanism: determining, according to a condition on which the small data packet transmission mechanism is used, whether the terminal device can transmit the data packet by using the small data packet transmission mechanism,
wherein the condition comprises any one or more of the following:
   a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the receiving unit is specifically configured to receive, in the following manner, the small data transmission indication information sent by the terminal device: receiving a radio resource control connection request message sent by the terminal device, wherein the radio resource control connection request message carries the small data transmission indication information; and
wherein the first indication sending unit is specifically configured to send, in the following manner, the first indication information used for indicating whether the terminal device can transmit the data packet by using the small data packet transmission mechanism: if the transmission determining unit determines that the terminal cannot transmit the data packet by using the small data packet transmission mechanism, sending a radio resource control connection setup message, so as to instruct the terminal device to transmit the data packet in a second transmission manner.

With reference to the first possible implementation manner of the third aspect, in a second possible implementation manner, the pre-configured attribute information includes at least one of a source IP address, a source port, a destination IP address, a destination port and a transport layer protocol number of the data packet.

According to a fourth aspect, a terminal device is provided, including:
a sending unit, configured to send a data packet or small data transmission indication information to a network device;
a first indication receiving unit, configured to receive first indication information that is returned by the network device according to a condition on which a small data packet transmission mechanism is used, where the first indication information is used for indicating whether the terminal device can transmit the data packet by using the small data packet transmission mechanism; and
a transmission unit, configured to transmit the data packet according to the first indication information received by the first indication receiving unit,
where the condition includes any one or more of the following:
   a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the sending unit is specifically configured to send the data packet or the small data transmission indication information to the network device in the following manner: sending a radio resource control connection request message to the network device, wherein the radio resource control connection request message carries the small data transmission indication information; and
wherein the first indication receiving unit is specifically configured to receive the first indication information in the following manner: if it is determined that the terminal cannot transmit the data packet by using the small data packet transmission mechanism, receiving a radio resource control connection setup message, so as to instruct the terminal device to transmit the data packet in a second transmission manner.

By using the foregoing solutions, when a terminal device transmits a data packet, if a condition on which the data packet is transmitted by using a small data packet transmission mechanism is satisfied, the data packet is transmitted by using the small data packet transmission mechanism, where the condition includes any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information. In this way, the terminal device does not always transmit the data packet by using the small data packet transmission mechanism, but instead, determines, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and a network device by using a currently needed transmission manner according to an actual need, thereby still further improving data packet transmission efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1a is a flowchart of a data packet transmission method performed by a terminal device in Method Embodiment 1 of the present invention;
FIG. 1b is a flowchart of a data packet transmission method performed by a network device in Method Embodiment 1 of the present invention;
FIG. 2 is a flowchart of a data packet transmission method according to Method Embodiment 2 of the present invention;
FIG. 3 is a flowchart of a data packet transmission method according to Method Embodiment 3 of the present invention;
FIG. 4 is a flowchart of a data packet transmission method according to Method Embodiment 4 of the present invention;
FIG. 5 is a flowchart of transmitting, by a terminal device, a data packet by using a small data packet transmission mechanism in a method embodiment of the present invention;
FIG. 6 is a flowchart of transmitting, by a terminal device, a data packet in a second transmission manner in a method embodiment of the present invention;
FIG. 7 is a flowchart of a data packet transmission method according to Method Embodiment 5 of the present invention;
FIG. 8 is a flowchart of a data packet transmission method according to Method Embodiment 6 of the present invention;
FIG. 9 is a flowchart of a data packet transmission method according to Method Embodiment 7 of the present invention;
FIG. 10 is a flowchart of a data packet transmission method according to Method Embodiment 8 of the present invention;
FIG. 11 is a schematic structural diagram of a terminal device according to Device Embodiment 1 of the present invention;
FIG. 12 is a schematic structural diagram of another terminal device according to Device Embodiment 1 of the present invention;
FIG. 13 is a schematic structural diagram of another terminal device according to Device Embodiment 2 of the present invention;
FIG. 14 is a schematic structural diagram of a network device according to Device Embodiment 3 of the present invention;
FIG. 15 is a schematic structural diagram of another network device according to Device Embodiment 5 of the present invention;
FIG. 16 is a schematic structural diagram of another network device according to Device Embodiment 6 of the present invention; and
FIG. 17 is a schematic structural diagram of another terminal device according to Device Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1 of the Present Invention

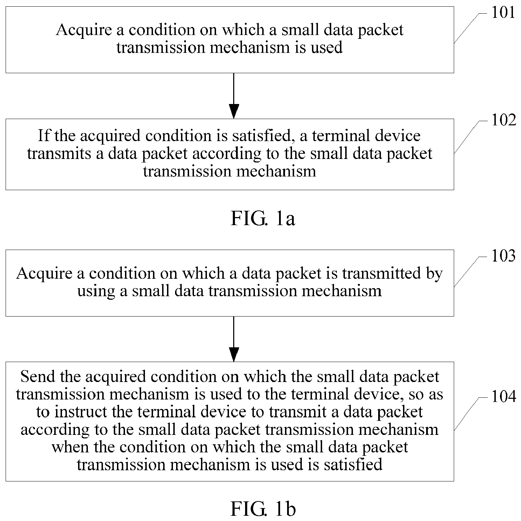

A data packet transmission method is provided. The method in this embodiment is mainly directed to data packet transmission in a communications system such as the Internet of Things. The method in this embodiment is a method performed by a terminal device, where the terminal device determines which manner is used to transmit a data packet. A flowchart is shown in FIG. 1a, and the method includes:
Step 101: Acquire a condition on which a small data packet transmission mechanism is used.

It can be understood that a data packet is transmitted in multiple manners, and the small data packet transmission mechanism herein may include but is not limited to any one of the following first transmission manners:
a transmission manner in which a data packet is transmitted by using radio bearer signaling, where the radio bearer signaling includes access stratum signaling or non-access stratum signaling (NAS), transmission information of the data packet, that is, information needed for transmitting the data packet, for example, key information and an evolved packet system (EPS) bearer identifier, may also be transmitted by using the radio bearer signaling, and the radio bearer signaling refers to signaling for interaction in a process of establishing a signaling bearer channel between a terminal device and a network device, such as link establishment signaling or link establishment completion signaling;
keeping a terminal device in a connected state, where specifically, when the terminal device completes transmission of a data packet, a network device (such as a base station) does not release context information of the terminal device, and when another data packet of the terminal device reaches the network device, the another data packet can be transmitted by using an original radio data bearer as long as a synchronization process between the terminal device and the network device is performed;
not establishing any dedicated radio bearer between a terminal device and a network device (such as a base station), where when a data packet of the terminal device reaches the network device, the terminal device transmits the data packet to the network device by using a public radio bearer configured by the network device;
simplifying a signaling interaction process of transmitting a data packet, that is, merging some pieces of signaling in a process of transmitting the data packet between the terminal device and the network device and performing transmission; and
disassembling, by a terminal device, a data packet into short messages, and then transmitting the data packet by using the short messages.

In another manner in which a data packet is transmitted, such as a second transmission manner, specifically, a signaling bearer channel is first established between a terminal device and a network device to perform multiple types of signaling process interaction, such as resource configuration and negotiation about transmission information; then a data bearer channel is established to individually transmit a data packet; and after transmission of the data packet is completed, a connection between the terminal device and the network device is released. When a data packet is transmitted in this manner, signaling for interaction between the terminal device and the network device is relatively much, and before the data packet is transmitted, a connection needs to be first established.

Herein, the condition on which the small data packet transmission mechanism is used refers to information about a situation in which a data packet is transmitted by using the small data packet transmission mechanism, and may specifically include but is not limited to any one or more of the following: a data amount of the data packet is less than a first threshold, and a data packet whose data amount is greater than or equal to the threshold is transmitted in another manner; transmission of the data packet is within a pre-configured time, and a data packet transmitted beyond the pre-configured time is transmitted in another transmission manner; within a sliding time window, a total data amount of data packets that have been transmitted by a terminal device by using the small data packet transmission mechanism does not exceed a second threshold, and when the total data amount of the data packets transmitted by the terminal device exceeds the threshold, the data packet is transmitted in another transmission manner; an application class of the data packet is a pre-configured application class; a terminal device is of a pre-configured access class (access class, AC); the data packet to be transmitted conforms to pre-configured attribute information, and the like. The pre-configured attribute information herein may include, for example, at least one piece of information such as a source IP address, a source port, a destination IP address, a destination port and a transport layer protocol number of the data packet. The first threshold and the second threshold may be configured by a network device according to a need.

When acquiring the condition on which the small data packet transmission mechanism is used, a terminal device may specifically extract the condition from locally pre-configured information, or may receive the condition on which the small data packet transmission mechanism is used and that is sent by a network device, for example, receive a broadcast control channel message sent by a network access device (such as a base station), where the broadcast control channel message carries the condition on which the small data packet transmission mechanism is used.

The terminal device may also request from the network device to acquire the condition, that is, the terminal device sends small data transmission indication information to a core network device, and receives the condition on which the small data packet transmission mechanism is used and that is returned by the core network device according to the small data transmission indication information. For example, in a process in which the terminal device is started and powered on, the terminal device sends an attach request (attach request) message or a newly added message to the core network device, and carries the small data transmission indication information in the attach request message or the new message, so as to instruct the terminal device to transmit the data packet by using the small data packet transmission mechanism; and the terminal device receives the condition on which the small data packet transmission mechanism is used and that is returned by the core network device according to the attach request message or the new message. The terminal device may also acquire the condition in another process of communicating with the core network device. Further, if the condition on which the small data packet transmission mechanism is used in the network device changes, the network device can actively send an updated condition on which the small data packet transmission mechanism is used to the terminal device.

Step 102: If the condition acquired in step 101 is satisfied, a terminal device transmits a data packet according to the small data packet transmission mechanism, or if the condition is not satisfied, the terminal device transmits the data packet in another transmission manner such as a second transmission manner.

The method in the embodiment shown in the foregoing FIG. 1a is a data packet transmission method performed by a terminal device, and the terminal device determines which manner is used to transmit a data packet. For a network device therein, a data packet may be specifically transmitted according to the following method. A flowchart is shown in FIG. 1b, and the method includes:
Step 103: A network device acquires a condition on which a terminal device uses a small data packet transmission mechanism.

Specifically, the condition on which the small data packet transmission mechanism is used includes but is not limited to any one or more of the following: a data amount of a data packet is less than a first threshold; transmission of a data packet is within a pre-configured time; within a sliding time window, a total data amount of data packets that have been transmitted by the terminal device by using the small data packet transmission mechanism does not exceed a second threshold; an application class of a data packet is a pre-configured application class; the terminal device is of a pre-configured access class; and a data packet conforms to pre-configured attribute information. The pre-configured attribute information includes at least one piece of information such as a source IP address, a source port, a destination IP address, a destination port and a transport layer protocol number of the data packet.

Step 104: The network device sends the acquired condition on which the small data packet transmission mechanism is used to the terminal device, so as to instruct the terminal device to transmit a data packet according to the small data packet transmission mechanism when the condition on which the small data packet transmission mechanism is used is satisfied.

If the network device is an access network device, the access network device may send the condition on which the small data packet transmission mechanism is used to the terminal device, for example, the access network device sends a broadcast control channel message, where the broadcast control channel message carries the condition on which the small data packet transmission mechanism is used. If the network device is a core network device, the core network device may also passively send the condition on which the small data packet transmission mechanism is used, for example, when receiving small data transmission indication information sent by the terminal device, the core network device (such as an MME or another mobility management device) sends the condition on which the small data packet transmission mechanism is used to the terminal device.

It can be seen that, in this embodiment of the present invention, when a terminal device transmits a data packet, if a condition on which a small data packet transmission mechanism is used is satisfied, the terminal device transmits the data packet by using the small data packet transmission mechanism. When the transmission is performed by using the small data packet transmission mechanism, the data packet may be transmitted by using radio bearer signaling, and therefore a data transmission channel does not need to be established to individually transmit the data packet; or the terminal device is kept in a connected state to transmit the data packet, so that a connection does not need to be established each time the data packet is transmitted; or a transmission manner in which the data packet is transmitted by using a public radio bearer configured by a network device is used, so that no dedicated radio bearer needs to be established to transmit the data packet; or some pieces of signaling in a process of transmitting the data packet between the terminal device and a network device are merged for transmission, so that signaling interaction in the data packet transmission process can be reduced; or the data packet is transmitted after being disassembled into short messages, and in this way, the data packet can be transmitted by using a short message service message network of a relatively low transmission requirement. In short, the transmission of the data packet by using the small data packet transmission mechanism can improve data packet transmission efficiency. Moreover, the terminal device does not always transmit the data packet by using the small data packet transmission mechanism, but instead, determines, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and the network device by using a currently needed transmission manner according to an actual need, thereby still further improving the data packet transmission efficiency.

### Embodiment 2 of the Present Invention

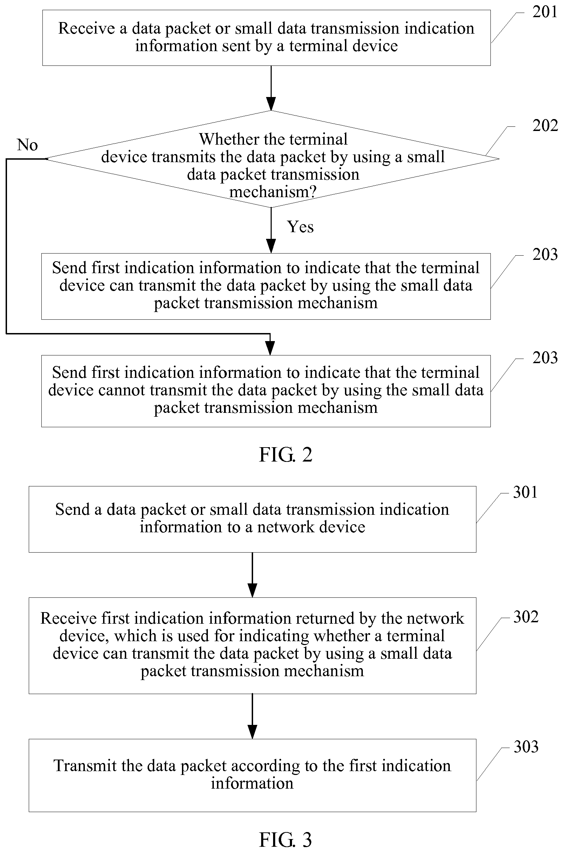

A data packet transmission method is provided. The method in this embodiment is mainly directed to data packet transmission in a communications system such as the Internet of Things, and is a method performed by a network device, where the network device determines which transmission manner is used by a terminal device to transmit a data packet. A flowchart is shown in FIG. 2, and the method includes:
Step 201: Receive a data packet or small data transmission indication information that is sent by a terminal device.

Specifically, the terminal device may transmit the data packet by using a small data packet transmission mechanism by default, and after the data packet or the small data transmission indication information reaches a network device, the network device determines whether the terminal device can transmit the data packet by using the small data packet transmission mechanism in a subsequent process.

In this way, the data packet or the small data transmission indication information that is sent by the terminal device may be sent to the network device according to the foregoing small data packet transmission mechanism, for example, the data packet or the small data transmission indication information is sent to the network device by using radio bearer signaling for interaction in a process of establishing a signaling bearer channel between the terminal device and the network device.

Step 202: Determine whether the terminal device can transmit the data packet according to a small data packet transmission mechanism.

Specifically, the determining may be performed according to a condition on which the small data packet transmission mechanism is used, or the determining may be performed according to a transmission situation in an actual network, such as a situation in which establishment of the signaling bearer channel between the terminal device and the network device is signaling interaction. For details about the condition on which the small data packet transmission mechanism is used herein, refer to the description in the foregoing Embodiment 1, and the details are not repeated herein.

Step 203: Send first indication information used for indicating whether the terminal device can transmit the data packet by using the small data packet transmission mechanism, where the network device may send the first indication information to the terminal device according to a determining result in step 202, to indicate that the terminal device can transmit the data packet by using the small data packet transmission mechanism, and in this way, the terminal device continues to transmit the data packet according to the small data packet transmission mechanism in the subsequent process; or send first indication information to the terminal device, to indicate that the terminal device cannot transmit the data packet by using the small data packet transmission mechanism, and in this way, the terminal device transmits the data packet in another transmission manner. The first indication information may be sent to the terminal device by the network device by using signaling in the process of transmitting the data packet between the network device and the terminal device according to the small data packet transmission mechanism.

### Embodiment 3 of the Present Invention

A data packet transmission method is provided. The method in this embodiment is mainly directed to data packet transmission in a communications system such as the Internet of Things, is a method performed by a terminal device, where a network device determines which transmission manner is used by the terminal device to transmit a data packet, and is a method performed by the terminal device in the method described in the foregoing Embodiment 2. A flowchart is shown in FIG. 3, and the method includes:
Step 301: Send a data packet or small data transmission indication information to a network device.

Specifically, a terminal device may transmit the data packet by using a small data packet transmission mechanism by default, and after the data packet or the small data transmission indication information reaches the network device, the network device determines whether the terminal device can transmit the data packet by using the small data packet transmission mechanism in a subsequent process. In this way, the data packet or the small data transmission indication information that is sent by the terminal device may be sent to the network device according to the foregoing small data packet transmission mechanism, for example, the data packet or the small data transmission indication information is sent to the network device by using radio bearer signaling for interaction in a process of establishing a signaling bearer channel between the terminal device and the network device.

Step 302: Receive first indication information that is returned by the network device according to a condition on which a small data packet transmission mechanism is used, where the first indication information is used for indicating whether the terminal device can transmit the data packet by using the small data packet transmission mechanism.

The small data packet transmission mechanism described in this embodiment of the present invention includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission.

Step 303: Transmit the data packet according to the first indication information received in step 302, where when the first indication information indicates that the terminal device can transmit the data packet by using the small data packet transmission mechanism, the terminal device continues to transmit the data packet according to the small data packet transmission mechanism in the subsequent process; or if the first indication information indicates that the terminal device cannot transmit the data packet by using the small data packet transmission mechanism, the terminal device transmits the data packet in another transmission manner. The first indication information may be sent to the terminal device by the network device by using signaling in the process of transmitting the data packet between the network device and the terminal device according to the small data packet transmission mechanism.

It can be seen that, in Embodiment 2 and Embodiment 3, when transmitting a data packet, a terminal device sends the data packet or small data transmission indication information to a network device, and the network device determines whether the terminal device can transmit the data packet by using a small data packet transmission mechanism, and controls, by using first indication information, transmission of the data packet by the terminal device. When the transmission is performed by using the small data packet transmission mechanism, the data packet may be transmitted by using radio bearer signaling, and therefore a data transmission channel does not need to be established to individually transmit the data packet; or the terminal device is kept in a connected state to transmit the data packet, so that a connection does not need to be established each time the data packet is transmitted; or a transmission manner in which the data packet is transmitted by using a public radio bearer configured by the network device is used, so that no dedicated radio bearer needs to be established to transmit the data packet; or some pieces of signaling in a process of transmitting the data packet between the terminal device and the network device are merged for transmission, so that signaling interaction in the data packet transmission process can be reduced; or the data packet is transmitted after being disassembled into short messages, and in this way, the data packet can be transmitted by using a short message service message network of a relatively low transmission requirement. In short, the transmission of the data packet by using the small data packet transmission mechanism can improve data packet transmission efficiency. Moreover, the terminal device does not always transmit the data packet by using the small data packet transmission mechanism, but instead, may determine, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and the network device by using a currently needed transmission manner according to an actual need, thereby still further improving the data packet transmission efficiency.

In the following Embodiment 4 to Embodiment 8, the data packet transmission method described in the embodiments of the present invention is described by using a specific application embodiment, and may be mainly applicable to a system of the Internet of Things, and a small data packet transmission mechanism is a first transmission manner in which a data packet is transmitted by using radio bearer signaling, which specifically includes:

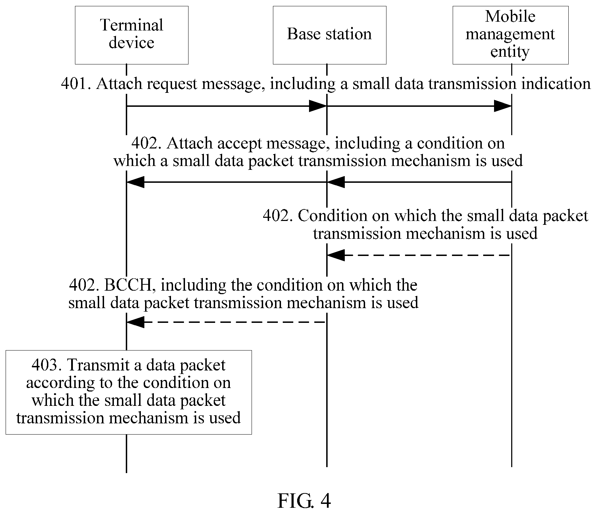

A flowchart of a data packet transmission method provided in Embodiment 4 of the present invention is shown in FIG. 4, and the method includes:
Step 401: During start-up and power-on, a terminal device sends an attach request message, and carries small data transmission indication information (small data tx indicator) in the attach request message.
Step 402: After the attach request message passes through a base station and then reaches a mobile management entity (Mobile Management Entity, MME), if the terminal device is allowed to transmit a data packet by using a small data packet transmission mechanism, the MME returns an attach accept (attach accept) message, and carries, in the attach accept message, a condition on which the data packet is transmitted by using the small data packet transmission mechanism, where the attach accept message may be sent to the terminal service after passing through the base station.

Further, if the condition on which the small data packet transmission mechanism is used changes, the MME can actively send an updated condition on which the small data packet transmission mechanism is used to the terminal device, and in this way, a manner in which the terminal device transmits the data packet can be dynamically controlled.

In a specific embodiment, referring to a part indicated by a dashed-line arrow in FIG. 4, the MME may first send, by using a new message, the condition on which the small data packet transmission mechanism is used to the base station, and the base station carries, in a broadcast control channel (Broadcast Control Channel, BCCH) message, the condition on which the small data packet transmission mechanism is used, and broadcasts the message to multiple terminal devices. If the condition on which the small data packet transmission mechanism is used on an MME side changes, the MME sends an updated condition on which the small data packet transmission mechanism is used to the base station, and then the base station broadcasts the condition.

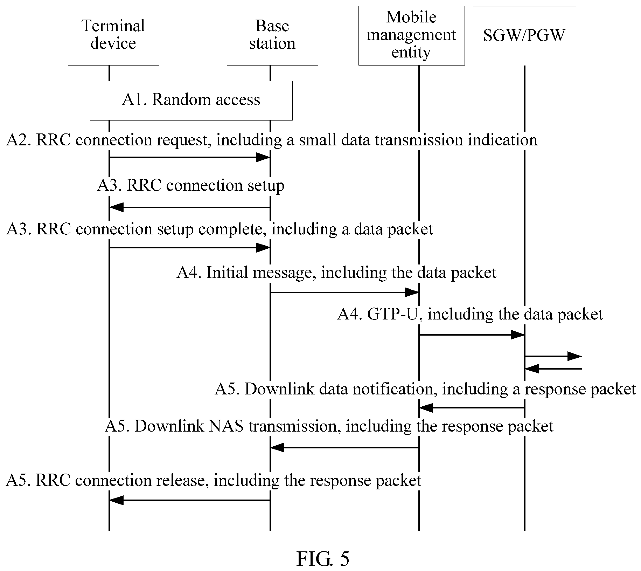

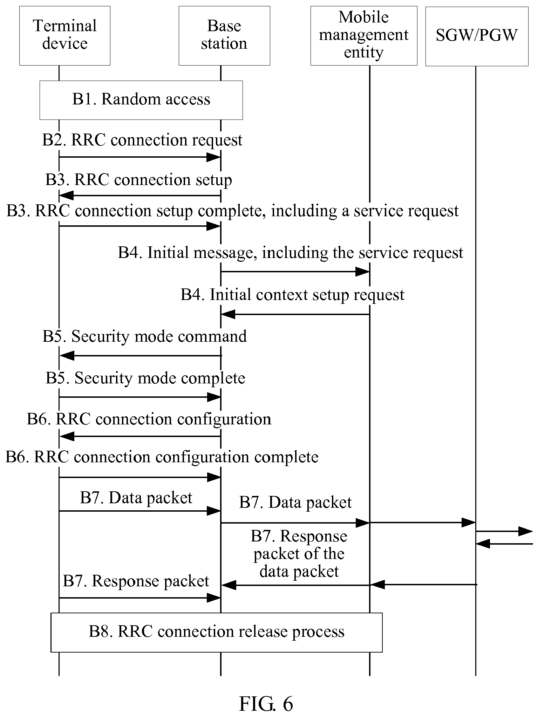

Step 403: The terminal device receives the attach accept message, and then transmits the data packet according to the condition on which the small data packet transmission mechanism is used and that is carried in the message.
(1) If the condition on which the small data packet transmission mechanism is used is satisfied for transmission of the data packet, the data packet is transmitted by using the small data packet transmission mechanism, and therefore the terminal device can perform the data packet transmission according to a process shown in FIG. 5, which specifically includes:
   A1: A terminal device randomly accesses a base station.
   A2: The terminal device sends a radio resource control (Radio Resource Control, RRC) connection request (connection request) message to the base station, to request to establish a data connection between the terminal device and the base station, where the RRC connection request message carries small data transmission indication information, and may further include information such as a temporary mobile subscriber identity (Temporary Mobile Subscriber Identity, TMSI) of the terminal device.
   A3: The base station may send RRC connection setup (connection setup) to the terminal device to set up the RRC connection; the terminal device may return an RRC connection setup complete message to the base station, where the RRC connection setup complete message may carry a data packet, and may further include other transmission information for transmitting the data packet, for example, information such as an evolved packet system (EPS) bearer identifier (bearer ID).
   A4: The base station carries the data packet in existing signaling and sends the signaling to an uplink, for example, the base station sends, to an MME, an initial message (initial message) sent by the terminal device, where the initial message carries the TMSI of the terminal device and the information that is carried in the RRC connection setup complete message sent by the terminal device; the MME sends a user plane protocol (GTP-U) message carrying information such as the data packet to a serving gateway (SGW)/packet gateway (Packet Gateway, PGW); and then the SGW/PGW transmits the data packet to the uplink sequentially.
   A5: If the SGW/PGW receives a message returned by an uplink device, and the message carries a response packet of the foregoing data packet, the SGW/PGW transmits the response packet to a downlink sequentially. Specifically, the SGW/PGW carries the response packet in a downlink data notification message and sends the message to the MME, the MME carries the response packet in a downlink non-access stratum (NAS) transmission message and sends the message to the base station, and the base station sends the response packet to the terminal device by carrying the response packet in an RRC connection release (release) message.
      It can be seen that, in the data transmission process from A1 to A5, the data packet is not individually transmitted by using a data transmission channel, and instead, is transmitted by being carried in radio bearer signaling (such as the foregoing RRC connection setup complete message and initial message) for interaction in a process of establishing a signaling bearer channel between the terminal device and the network device, and before the data packet is transmitted, a special process such as negotiation about transmission information of the data packet is not used between the terminal device and the network device; in this way, signaling for transmitting the data packet can be reduced, and data transmission efficiency is improved.
(2) If the condition on which the small data packet transmission mechanism is used is not satisfied for transmission of the data packet, the data packet is transmitted in another transmission manner, and therefore the terminal device can transmit the data packet according to a second transmission manner, which, referring to FIG. 6, includes:
   B1: A terminal device randomly accesses a base station.
   B2: The terminal device sends an RRC connection request message to the base station, to request to establish a data connection between the terminal device and the base station, where the RRC connection request message may include information such as a TMSI of the terminal device.
   B3: The base station sends RRC connection setup (connection setup) to the terminal device to set up the RRC connection; the terminal device may return an RRC connection setup complete message to the base station, where the RRC connection setup complete message may carry an indication of a server request (service request), so as to request for a service of providing a data connection.
   B4: The base station sends an initial message (initial message) of the terminal device to an MME, where the initial message carries the TMSI of the terminal device and information that is carried in the RRC connection setup complete message sent by the terminal device, that is, the service request; the MME may return an initial context setup request to the base station, where the request carries information needed when a data packet is transmitted, for example, information such as a security key and wireless connection capability information.
   B5: The base station sends a security mode command to the terminal device, so as to control the terminal device to enter a security mode; and the terminal device returns security mode complete signaling to the base station.
   B6: The base station configures information for an RRC connection between the terminal device and the base station by using an RRC connection configuration message, for example, configures information such as a radio bearer; and the terminal device returns an RRC connection configuration complete message.
   B7: The terminal device individually sends the data packet to an uplink network device, and receives a response packet that is of the data packet and that is individually returned by the uplink network device.
   B8: The terminal device, the base station and the MME perform an RRC connection release process.

It can be seen that, in the data transmission process from step B1 to step B6, after a signaling bearer channel is established between the terminal device and the network device, the terminal device and the network device need to negotiate information needed for transmitting the data packet; then in step B7, the data packet is individually transmitted by using a data transmission channel; and finally in step B8, RRC connection release is performed.

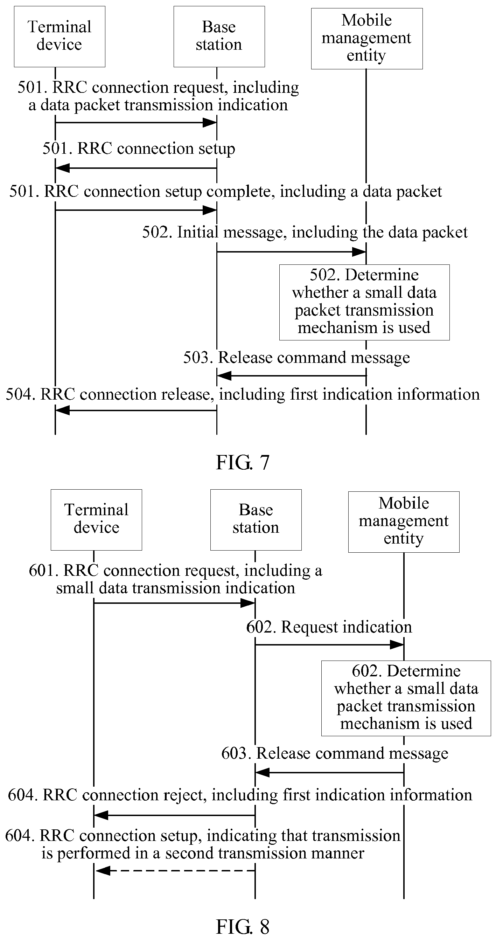

According to a data packet transmission method provided in Embodiment 5 of the present invention, an MME is mainly used to determine whether a terminal device can transmit a data packet by using a small data packet transmission mechanism. A flowchart is shown in FIG. 7, and the method includes:
Step 501: A terminal device first transmits a data packet according to a small data packet transmission mechanism by default, that is, transmits the data packet according to the process in the foregoing FIG. 5, and after initiating an RRC connection request, and receiving an RRC connection setup sent by a base station, the terminal device carries the data packet in an RRC connection setup complete message and sends the message to the base station.
Step 502: The base station sends an initial message of the terminal device to an MME, and carries the data packet. In this way, the MME may determine, according to a condition on which the data packet is transmitted by using the small data packet transmission mechanism, whether the terminal device can transmit the data packet by using the small data packet transmission mechanism, and if the terminal device can transmit the data packet by using the small data packet transmission mechanism, the data packet is continuously sent by using the small data packet transmission mechanism according to the step after step A4 in the process shown in the foregoing FIG. 5; or if the terminal device cannot transmit the data packet by using the small data packet transmission mechanism, the MME performs step 503.
Step 503: The MME returns a release command (release command) message to the base station, to request the terminal device to release a connection of the currently transmitted data packet.
Step 504: The base station sends an RRC connection release message to the terminal, where the RRC connection release message may carry first indication information to indicate that the terminal device cannot transmit the data packet by using the small data packet transmission mechanism, and may further carry related information about that the terminal device cannot transmit the data packet by using the small data packet transmission mechanism, such as a reason and time. In this way, the terminal device transmits the data packet in another manner such as the second transmission manner described in the foregoing FIG. 6.

According to a data packet transmission method provided in Embodiment 6 of the present invention, an MME is mainly used to determine whether a terminal device can transmit a data packet by using a small data packet transmission mechanism. A flowchart is shown in FIG. 8, and the method includes:
Step 601: A terminal device first transmits a data packet according to a small data packet transmission mechanism by default, that is, transmits the data packet according to the process in the foregoing FIG. 5, and when the terminal device sends an RRC connection request message to a base station, the RRC connection request message carries a small data transmission indication.
Step 602: The base station sends, to an MME, a request indication indicating that the terminal device needs to transmit the data packet by using the small data packet transmission mechanism, and the MME determines, according to a condition on which the small data packet transmission mechanism is used, whether the terminal device can transmit the data packet by using the small data packet transmission mechanism, and if the terminal device can transmit the data packet by using the small data packet transmission mechanism, the data packet is continuously sent by using the small data packet transmission mechanism according to the steps after step A3 in the process shown in the foregoing FIG. 5; or if the terminal device cannot transmit the data packet by using the small data packet transmission mechanism, the MME performs step 603.
Step 603: The MME returns a release command (release command) message to the base station, to request the terminal device to release a connection of the currently transmitted data packet.
Step 604: The base station sends an RRC connection reject message to the terminal, where the RRC connection reject message may carry first indication information to indicate that the terminal device cannot transmit the data packet by using the small data packet transmission mechanism, and may further carry related information about that the terminal device cannot transmit the data packet by using the small data packet transmission mechanism, such as a reason and time; or the base station sends an RRC connection setup message (a message indicated by a dashed-line arrow in FIG. 8) to the terminal device, and instructs the terminal device to continue to transmit the data packet in another transmission manner such as the second transmission manner described in the foregoing FIG. 6.

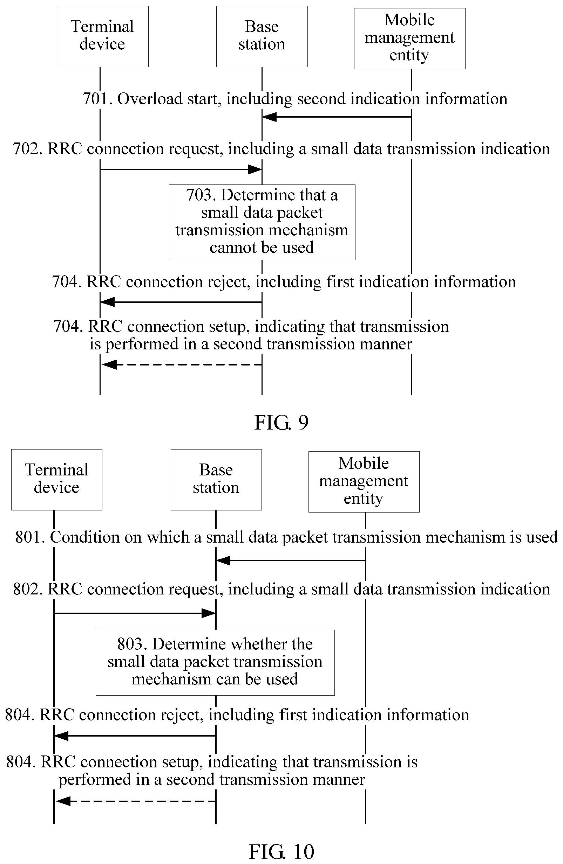

According to a data packet transmission method provided in Embodiment 7 of the present invention, a base station is mainly used to determine whether a terminal device can transmit a data packet by using a small data packet transmission mechanism. A flowchart is shown in FIG. 9, and the method includes:
Step 701: An MME performs load detection, and if detecting overload, actively sends an overload start (overload start) message to a base station, where the overload start message carries second indication information used for indicating that a terminal device is refused to transmit a data packet by using a small data packet transmission mechanism.
Step 702: The terminal device first transmits the data packet according to the small data packet transmission mechanism by default, that is, transmits the data packet according to the process in the foregoing FIG. 5, and when the terminal device sends an RRC connection request message to the base station, the RRC connection request message carries small data transmission indication information.
Step 703: The base station determines, according to the second indication information carried in the overload start message received in step 701, that the terminal device cannot transmit the data packet by using the small data packet transmission mechanism.
Step 704: The base station sends an RRC connection reject message to the terminal, where the RRC connection reject message may carry first indication information to indicate that the terminal device cannot transmit the data packet by using the small data packet transmission mechanism, and may further carry related information about that the terminal device cannot transmit the data packet by using the small data packet transmission mechanism, such as a reason and time; or the base station sends an RRC connection setup message (a message indicated by a dashed-line arrow in FIG. 9) to the terminal device, and instructs the terminal device to continue to transmit the data packet in another transmission manner such as the second transmission manner described in the foregoing FIG. 6.

According to a data packet transmission method provided in Embodiment 8 of the present invention, a base station is mainly used to determine whether a terminal device can transmit a data packet by using a small data packet transmission mechanism. A flowchart is shown in FIG. 10, and the method includes:
Step 801: An MME actively sends an overload start (overload start) message or a new message to a base station, where the overload start message or the new message carries a condition on which a small data packet transmission mechanism is used.
Step 802: A terminal device first transmits a data packet according to the small data packet transmission mechanism by default, that is, transmits the data packet according to the process in the foregoing FIG. 5, and when the terminal device sends an RRC connection request message to the base station, the RRC connection request message carries a small data transmission indication.
Step 803: The base station determines, according to the condition on which the small data packet transmission mechanism is used and that is received in step 801, whether the terminal can transmit the data packet by using the small data packet transmission mechanism, and if the terminal device can transmit the data packet by using the small data packet transmission mechanism, the base station continues to transmit the data packet by using the small data packet transmission mechanism according to the process after step A3 in the foregoing FIG. 5; or if the terminal device cannot transmit the data packet by using the small data packet transmission mechanism, the base station performs step 804.
Step 804: The base station sends an RRC connection reject message to the terminal, where the RRC connection reject message may carry first indication information to indicate that the terminal device cannot transmit the data packet by using the small data packet transmission mechanism, and may further carry related information about that the terminal device cannot transmit the data packet by using the small data packet transmission mechanism, such as a reason and time; or the base station sends an RRC connection setup message (a message indicated by a dashed-line arrow in FIG. 10) to the terminal device, and instructs the terminal device to continue to transmit the data packet in another transmission manner such as the second transmission manner described in the foregoing FIG. 6.

It should be noted that, in the foregoing Embodiment 4 to Embodiment 8, the condition on which the small data packet transmission mechanism is used is dynamically sent to the terminal device by the MME by using the base station, and in another specific embodiment, the condition on which the small data packet transmission mechanism is used may be pre-configured for the terminal device in an open mobile architecture (Open Mobile Architecture, OMA) device management (device management, DM) manner, that is, the condition is configured into the terminal device in a manner of downloading a data packet.

### Device Embodiment 1 of the Present Invention

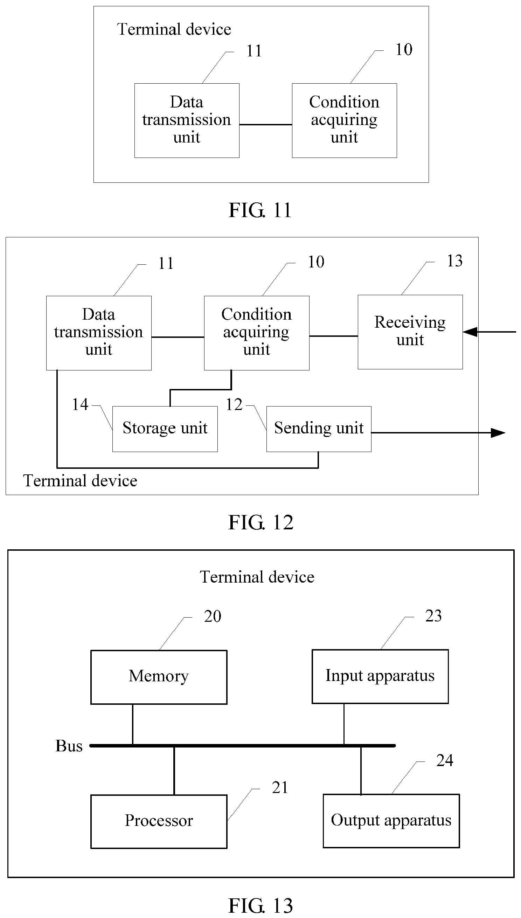

A terminal device is provided. Units of the terminal device in this embodiment may perform transmission of a data packet according to the method performed by the terminal device described in Embodiment 1. A schematic structural diagram is shown in FIG. 11, and the terminal device includes:
a condition acquiring unit 10, configured to acquire a condition on which a data packet is transmitted by using a small data packet transmission mechanism,
where the condition may include any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information, where the pre-configured attribute information includes at least one piece of information such as a source IP address, a source port, a destination IP address, a destination port and a transport layer protocol number of the data packet;
further, if the condition acquired by the condition acquiring unit is that the data packet conforms to the pre-configured attribute information, the pre-configured attribute information includes at least one of a source IP address, a source port, a destination IP address, a destination port and a transport layer protocol number of the data packet;
the small data packet transmission mechanism includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission; and
if the condition on which the data packet is transmitted by using the small data packet transmission mechanism changes, the condition acquiring unit 10 may further dynamically acquire an updated condition on which the data packet is transmitted by using the small data packet transmission mechanism; and
a data transmission unit 11, configured to: if the condition on which the small data packet transmission mechanism is used and that is acquired by the condition acquiring unit 10 is satisfied, transmit the data packet according to the small data packet transmission mechanism.

By using the terminal device in this embodiment of the present invention, during transmission of a data packet, if a condition on which a small data packet transmission mechanism is used and that is acquired by a condition acquiring unit 10 is satisfied, a data transmission unit 11 transmits the data packet by using the small data packet transmission mechanism. When the transmission is performed by using the small data packet transmission mechanism, the data packet may be transmitted by using radio bearer signaling, and therefore a data transmission channel does not need to be established to individually transmit the data packet; or the terminal device is kept in a connected state to transmit the data packet, so that a connection does not need to be established each time the data packet is transmitted; or a transmission manner in which the data packet is transmitted by using a public radio bearer configured by a network device is used, so that no dedicated radio bearer needs to be established to transmit the data packet; or some pieces of signaling in a process of transmitting the data packet between the terminal device and a network device are merged for transmission, so that signaling interaction in the data packet transmission process can be reduced; or the data packet is transmitted after being disassembled into short messages, and in this way, the data packet can be transmitted by using a short message service message network of a relatively low transmission requirement. In short, the transmission of the data packet by using the small data packet transmission mechanism can improve data packet transmission efficiency. Moreover, the terminal device does not always transmit the data packet by using the small data packet transmission mechanism, but instead, determines, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and the network device by using a currently needed transmission manner according to an actual need, thereby still further improving the data packet transmission efficiency.

Referring to FIG. 12, in a specific embodiment, besides including the structure described in FIG. 11, the terminal device may further include a receiving unit 13, or the terminal device includes a receiving unit 13 and a sending unit 12, specifically:
the receiving unit 13 is configured to receive a broadcast control channel message sent by an access network device, where the broadcast control channel message carries the condition on which the small data packet transmission mechanism is used; and in this case, the condition acquiring unit 10 is configured to acquire the condition on which the small data packet transmission mechanism is used and that is in the broadcast control channel message received by the receiving unit 13; and
the sending unit 12 is configured to send small data transmission indication information to a core network device; the receiving unit 13 is configured to receive the condition on which the small data transmission mechanism is used and that is returned by the core network device according to the small data transmission indication information; and in this case, the condition acquiring unit 10 is configured to acquire the condition on which the small data packet transmission mechanism is used and that is received by the receiving unit 13.

Specifically, the sending unit 12 may be configured to send an attach request message or a new message to the core network device, where the attach request message or the new message carries the small data transmission indication information; and the receiving unit 13 is configured to receive the condition on which the small data packet transmission mechanism is used and that is returned by the core network device according to the attach request message or the new message that is sent by the sending unit 12.

In another specific embodiment, the condition acquiring unit 10 is configured to acquire the pre-configured condition on which the small data transmission mechanism is used, and specifically acquire the condition on which the small data transmission mechanism is used and that is pre-configured in an open mobile architecture device management OMA DM manner. In this case, the terminal device may further include a storage unit 14 that is configured to store the pre-configured condition on which the small data transmission mechanism is used.

The data packet transmission unit 11 specifically transmits the data packet according to the small data packet transmission mechanism by using the sending unit 12.

### Device Embodiment 2 of the Present Invention

A terminal device is provided. Units of the terminal device in this embodiment may perform transmission of a data packet according to the method performed by the terminal device described in Embodiment 1. A schematic structural diagram is shown in FIG. 13, and the terminal device includes: a memory 20, a processor 21, an input apparatus 23 and an output apparatus 24 that are separately connected to a bus.

The memory 20 is configured to store data that is input from the input apparatus 23, and may further store information such as a file necessary for the processor 21 to process data.

The input apparatus 23 and the output apparatus 24 are ports for the terminal device to communicate with another device, and may further include external devices of the terminal device, such as a display and a keyboard.

The processor 21 in this embodiment may be configured to acquire a condition on which a data packet is transmitted by using a small data packet transmission mechanism, where the condition includes any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information; and if the condition is satisfied, control the input apparatus 23 and the output apparatus 24 to transmit the data packet according to the small data packet transmission mechanism.

If the condition acquired by the processor 21 is that the data packet conforms to the pre-configured attribute information, the pre-configured attribute information includes at least one of a source IP address, a source port, a destination IP address, a destination port and a transport layer protocol number of the data packet.

Further, if the condition on which the small data packet transmission mechanism is used changes, the processor 21 may further dynamically acquire an updated condition on which the small data packet transmission mechanism is used.

In a specific embodiment, the input apparatus 23 may receive the condition on which the small data packet transmission mechanism is used and that is actively sent by an access network device, and in this way, the processor 21 may control data packet transmission according to the condition on which the small data packet transmission mechanism is used and that is received by the input apparatus 23; or the processor 21 controls the output apparatus 24 to send small data transmission indication information to a core network device, and when the input apparatus 23 receives the condition on which the small data packet transmission mechanism is used and that is returned by the core network device according to the small data transmission indication information, the processor 21 may control data packet transmission according to the condition on which the small data packet transmission mechanism is used and that is received by the input apparatus 23.

In a specific embodiment, the input apparatus 23 may be configured to receive a broadcast control channel message sent by an access network device, where the broadcast control channel message carries the condition on which the small data packet transmission mechanism is used; and the processor 21 is specifically configured to acquire, in the following manner, the condition on which the data packet is transmitted by using the small data packet transmission mechanism: acquiring the condition on which the small data packet transmission mechanism is used and that is in the broadcast control channel message received by the input apparatus 23; or
the output apparatus 24 may be configured to send small data transmission indication information to a core network device; the input apparatus 23 may be configured to receive the condition on which the small data transmission mechanism is used and that is returned by the core network device according to the small data transmission indication information; and the processor 21 is specifically configured to acquire, in the following manner, the condition on which the data packet is transmitted by using the small data packet transmission mechanism: acquiring the condition on which the small data packet transmission mechanism is used and that is received by the input apparatus 23; or
the memory 20 is configured to store the pre-configured condition on which the small data transmission mechanism is used; and the processor 21 is specifically configured to acquire, in the following manner, the condition on which the data packet is transmitted by using the small data packet transmission mechanism: acquiring the condition on which the small data transmission mechanism is used and that is stored in the memory 20.

The condition on which the small data transmission mechanism is used and that is stored in the memory 20 is pre-configured in an open mobile architecture device management OMA DM manner.

It should be noted that, the terminal device in this embodiment is in a situation in which an application apparatus and a communications apparatus are included in a same entity. Specifically, the input apparatus 23 and the output apparatus 24 in the terminal device belong to parts of the communications apparatus, and the processor 21 and the memory 20 belong to parts of the application apparatus. In some cases, the application apparatus (such as a watt-hour meter) and the communications apparatus that are included in the terminal device may be separate entities, and in this case, the application apparatus and the communications apparatus may be connected to each other by using a communications interface such as an application programming interface (Application Programming Interface, API).

### Device Embodiment 3 of the Present Invention

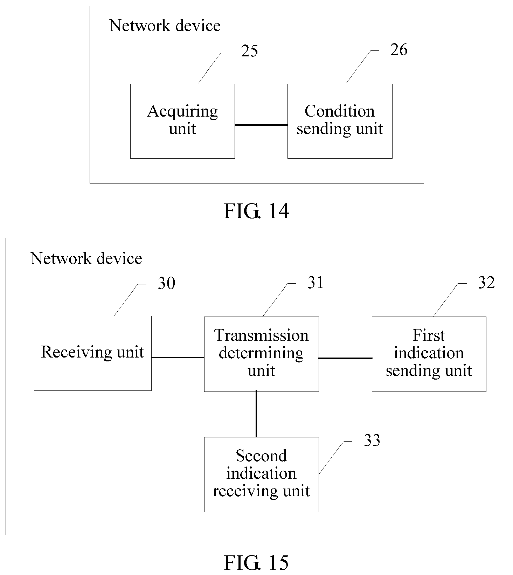

A network device is provided. Units of the network device in this embodiment may perform transmission of a data packet according to the method performed by the network device described in Embodiment 1. A schematic structural diagram is shown in FIG. 14, and the network device includes:
an acquiring unit 25, configured to acquire a condition on which a terminal device uses a small data packet transmission mechanism; and
a condition sending unit 26, configured to send the condition on which the small data packet transmission mechanism is used and that is acquired by the acquiring unit 25 to the terminal device, so as to instruct the terminal device to transmit a data packet according to the small data packet transmission mechanism when the condition on which the small data packet transmission mechanism is used is satisfied, where the condition includes any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information.

Further, if the condition acquired by the acquiring unit is that the data packet conforms to the pre-configured attribute information, the pre-configured attribute information may include at least one of a source IP address, a source port, a destination IP address, a destination port and a transport layer protocol number of the data packet.

Specifically, if the network device in this embodiment is an access network device, the condition sending unit 26 is configured to send a broadcast control channel message, where the broadcast control channel message carries the condition on which the small data packet transmission mechanism is used; or if the network device in this embodiment is a core network device, the condition sending unit 26 is configured to: when the network device receives small data transmission indication information sent by the terminal device, send the condition on which the small data packet transmission mechanism is used to the terminal device.

Further, if the condition on which the small data packet transmission mechanism is used changes, the condition sending unit 26 may further send an updated condition on which the small data packet transmission mechanism is used to the terminal device.

### Device Embodiment 4 of the Present Invention

A network device is provided. Units of the network device in this embodiment may perform transmission of a data packet according to the method performed by the network device described in Embodiment 1. The network device includes: a memory, a processor, an input apparatus and an output apparatus that are separately connected to a bus.

The memory is configured to store data that is input from the input apparatus, and may further store information such as a file necessary for the processor to process data.

The input apparatus and the output apparatus are ports for the network device to communicate with another device, and may further include external devices of the network device, such as a display and a keyboard.

The processor in this embodiment is configured to acquire a condition on which a terminal device uses a small data packet transmission mechanism; and control the output apparatus to send the acquired condition on which the small data packet transmission mechanism is used to the terminal device, so as to instruct the terminal device to transmit a data packet according to the small data packet transmission mechanism when the condition on which the small data packet transmission mechanism is used is satisfied, where the condition includes any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information.

Further, if the condition acquired by the processor is that the data packet conforms to the pre-configured attribute information, the pre-configured attribute information includes at least one of a source IP address, a source port, a destination IP address, a destination port and a transport layer protocol number of the data packet.

Specifically, if the network device in this embodiment is an access network device, the processor is configured to control the output apparatus to send a broadcast control channel message, where the broadcast control channel message carries the condition on which the small data packet transmission mechanism is used; or if the network device in this embodiment is a core network device, the processor is configured to: when the input apparatus of the network device receives small data transmission indication information sent by the terminal device, control the output apparatus to send the condition on which the small data packet transmission mechanism is used to the terminal device.

Further, if the condition on which the small data packet transmission mechanism is used changes, the processor is further configured to control the output apparatus to send an updated condition on which the small data packet transmission mechanism is used to the terminal device.

The second indication information received by the second indication receiving unit is sent by the mobile management entity to the base station after the mobile management entity detects overload.

### Device Embodiment 5 of the Present Invention

A network device is provided. Units of the network device in this embodiment may perform transmission of a data packet according to the method described in Embodiment 2. A schematic structural diagram is shown in FIG. 15, and the network device includes:
a receiving unit 30, configured to receive a data packet or small data transmission indication information that is sent by a terminal device;
a transmission determining unit 31, configured to: after the receiving unit 30 receives the data packet or the small data transmission indication information, determine whether the terminal device can transmit the data packet by using a small data packet transmission mechanism, where
the small data packet transmission mechanism includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission; and
specifically, the transmission determining unit 31 may perform the determining according to the condition on which the small data packet transmission mechanism is used, where the condition is described in the foregoing embodiment, and details are not repeated herein; and
a first indication sending unit 32, configured to send, according to a determining result of the transmission determining unit 31, first indication information used for indicating whether the terminal device can transmit the data packet by using the small data packet transmission mechanism.

In this embodiment, the receiving unit 30 may receive a radio resource control connection request message sent by the terminal device, where the radio resource control connection request message carries the small data transmission indication information; and if the transmission determining unit 31 determines that the terminal cannot transmit the data packet by using the small data packet transmission mechanism, the first indication sending unit 32 may send a radio resource control connection reject message, where the radio resource control connection reject message carries the first indication information, and the first indication information is used for indicating that the terminal device cannot transmit the data packet by using the small data packet transmission mechanism; or the first indication sending unit 32 sends a radio resource control connection setup message, so as to instruct the terminal device to transmit the data packet in a second transmission manner.

In another case, when the receiving unit 30 can receive a radio resource control connection setup complete message sent by the terminal device, where the radio resource control connection setup complete message carries the data packet, if the transmission determining unit 31 determines that the terminal cannot transmit the data packet by using the small data packet transmission mechanism, the first indication sending unit 32 may send a radio resource control connection release message, where the radio resource control connection release message carries the first indication information, and the first indication information is used for indicating that the terminal device cannot transmit the data packet by using the small data packet transmission mechanism.

In a specific embodiment, if the network device in this embodiment is a base station, and the network device may further include a second indication receiving unit 33 that is configured to receive second indication information that is sent by a mobile management entity and that is used for indicating that the terminal device is refused to transmit the data packet by using the small data packet transmission mechanism, the transmission determining unit 31 determines, according to the second indication information received by the second indication receiving unit 33, that the terminal device cannot transmit the data packet by using the small data packet transmission mechanism. In this case, the MME may actively send the second indication information to the network device in this embodiment according to an actual situation (such as when overload is detected).

In the network device in this embodiment, a receiving unit 30 receives a data packet or small data transmission indication information that is sent by a terminal device, a transmission determining unit 31 determines whether the terminal device can transmit the data packet by using a small data packet transmission mechanism, and a first indication sending unit 32 controls, by using first indication information, transmission of the data packet by the terminal device. When the transmission is performed by using the small data packet transmission mechanism, the data packet may be transmitted by using radio bearer signaling, and therefore a data transmission channel does not need to be established to individually transmit the data packet; or the terminal device is kept in a connected state to transmit the data packet, so that a connection does not need to be established each time the data packet is transmitted; or a transmission manner in which the data packet is transmitted by using a public radio bearer configured by the network device is used, so that no dedicated radio bearer needs to be established to transmit the data packet; or some pieces of signaling in a process of transmitting the data packet between the terminal device and the network device are merged for transmission, so that signaling interaction in the data packet transmission process can be reduced; or the data packet is transmitted after being disassembled into short messages, and in this way, the data packet can be transmitted by using a short message service message network of a relatively low transmission requirement. In short, the transmission of the data packet by using the small data packet transmission mechanism can improve data packet transmission efficiency. Moreover, the terminal device does not always transmit the data packet by using the small data packet transmission mechanism, but instead, determines, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and the network device by using a currently needed transmission manner according to an actual need, thereby still further improving the data packet transmission efficiency.

### Device Embodiment 6 of the Present Invention

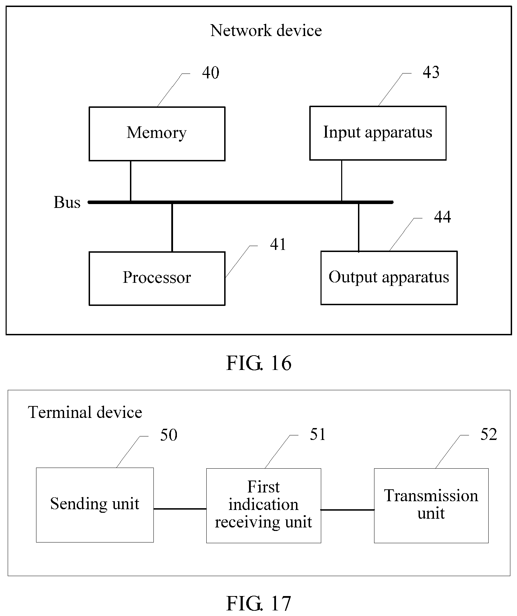

A network device is provided. Units of the network device may perform transmission of a data packet according to the method described in Embodiment 2. A schematic structural diagram is shown in FIG. 16, and the network device includes: a memory 40, a processor 41, an input apparatus 43 and an output apparatus 44 that are separately connected to a bus.

The memory 40 is configured to store data that is input from the input apparatus 43, and may further store information such as a file necessary for the processor 41 to process data.

The input apparatus 43 and the output apparatus 44 are ports for the network device to communicate with another device, and may further include external devices of the network device, such as a display, a keyboard, a mouse and a printer.

Specifically, the processor 41 is configured to: after the input apparatus 43 receives a data packet or small data transmission indication information that is sent by a terminal device, determine whether the terminal device can transmit the data packet by using a small data packet transmission mechanism, where the small data packet transmission mechanism includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission; and control the output apparatus 44 to send first indication information used for indicating whether the terminal device can transmit the data packet by using the small data packet transmission mechanism. The processor 41 may perform the determining according to the condition on which the small data packet transmission mechanism is used, where the condition is described in the foregoing embodiment, and details are not repeated herein.

In a specific embodiment, when the input apparatus 43 receives a radio resource control connection request message sent by the terminal device, where the radio resource control connection request message carries the small data transmission indication information, if the processor 41 determines that the terminal cannot transmit the data packet by using the small data packet transmission mechanism, the processor 41 may control the output apparatus 44 to send a radio resource control connection reject message, where the radio resource control connection reject message carries the first indication information, and the first indication information is used for indicating that the terminal device cannot transmit the data packet by using the small data packet transmission mechanism; or control the output apparatus 44 to send a radio resource control connection setup message, so as to instruct the terminal device to transmit the data packet in a second transmission manner.

In another case, when the input apparatus 43 may receive a radio resource control connection setup complete message sent by the terminal device, where the radio resource control connection setup complete message carries the data packet, if the processor 41 determines that the terminal cannot transmit the data packet by using the small data packet transmission mechanism, the processor 41 may control the output apparatus 44 to send a radio resource control connection release message, where the radio resource control connection release message carries the first indication information, and the first indication information is used for indicating that the terminal device cannot transmit the data packet by using the small data packet transmission mechanism.

In another specific embodiment, if the network device in this embodiment is a base station, and the input apparatus 43 may further receive second indication information that is sent by a mobile management entity and that is used for indicating that the terminal device is refused to transmit the data packet by using the small data packet transmission mechanism, the processor 41 may further determine, according to the second indication information, that the terminal device cannot transmit the data packet by using the small data packet transmission mechanism.

### Device Embodiment 7 of the Present Invention

A terminal device is provided. Units of the terminal device may perform transmission of a data packet according to the method described in the foregoing Embodiment 3. A schematic structural diagram of the terminal device is shown in FIG. 17, and the terminal device includes:
a sending unit 50, configured to send a data packet or small data transmission indication information to a network device;
a first indication receiving unit 51, configured to: after the sending unit 50 sends the data packet or the small data transmission indication information, receive first indication information that is returned by the network device according to a condition on which a small data packet transmission mechanism is used, where the first indication information is used for indicating whether the terminal device can transmit the data packet by using the small data packet transmission mechanism, where the small data packet transmission mechanism includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission; and
the condition includes but is not limited to any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information; and
a transmission unit 52, configured to transmit the data packet according to the first indication information received by the first indication receiving unit 51.

It should be noted that, in this embodiment of the present invention, the terminal device may first transmit the data packet by using the small data packet transmission mechanism by default. Specifically, the sending unit 50 of the terminal device may send a radio resource control connection request message to the network device to initiate an RRC connection, where the radio resource control connection request message carries the small data transmission indication information; and when the first indication receiving unit 51 receives a radio resource control connection reject message, where the radio resource control connection reject message carries the first indication information, and the first indication information is used for indicating that the terminal device cannot transmit the data packet by using the small data packet transmission mechanism, the transmission unit 52 transmits the data packet in another manner such as a second transmission manner, which is specifically shown in a flowchart shown in FIG. 6, and details are not repeated herein; or when the first indication receiving unit 51 receives a radio resource control connection setup message, so as to instruct the terminal device to transmits the data packet in a second transmission manner, the transmission unit 52 continues to perform the RRC connection process, and transmit the data packet in the second transmission manner.

In another case, the terminal device may first transmit the data packet by using the small data packet transmission mechanism by default. Specifically, the data packet/indication sending unit 50 of the terminal device may initiate an RRC connection. When an RRC connection setup message sent by the network device is received, the sending unit 50 may send a radio resource control connection setup complete message to the network device, where the radio resource control connection setup complete message carries the data packet; when the first indication receiving unit 51 receives a radio resource control connection release message, where the radio resource control connection release message carries the first indication information, and the first indication information is used for indicating that the terminal device cannot transmit the data packet by using the small data packet transmission mechanism, the transmission unit 52 transmits the data packet in another manner such as a second transmission manner, which is specifically shown in a flowchart shown in FIG. 6, and details are not repeated herein.

It can be seen that, in the terminal device in this embodiment, a sending unit 50 may send a data packet or small data transmission indication information to a network device, and the network device determines whether the terminal device can transmit the data packet by using a small data packet transmission mechanism; and when a first indication receiving unit 51 receives first indication information, a transmission unit 52 transmits the data packet by using the first indication information. When the transmission is performed by using the small data packet transmission mechanism, the data packet may be transmitted by using radio bearer signaling, and therefore a data transmission channel does not need to be established to individually transmit the data packet; or the terminal device is kept in a connected state to transmit the data packet, so that a connection does not need to be established each time the data packet is transmitted; or a transmission manner in which the data packet is transmitted by using a public radio bearer configured by the network device is used, so that no dedicated radio bearer needs to be established to transmit the data packet; or some pieces of signaling in a process of transmitting the data packet between the terminal device and the network device are merged for transmission, so that signaling interaction in the data packet transmission process can be reduced; or the data packet is transmitted after being disassembled into short messages, and in this way, the data packet can be transmitted by using a short message service message network of a relatively low transmission requirement. In short, the transmission of the data packet by using the small data packet transmission mechanism can improve data packet transmission efficiency. Moreover, the terminal device does not always transmit the data packet by using the small data packet transmission mechanism, but instead, determines, according to a condition, whether the data packet needs to be transmitted by using the small data packet transmission mechanism, so as to ensure that the terminal device does not abuse the small data packet transmission mechanism, thereby ensuring that the data packet can be transmitted between the terminal device and the network device by using a currently needed transmission manner according to an actual need, thereby still further improving the data packet transmission efficiency.

### Device Embodiment 8 of the Present Invention

A terminal device is provided. Units of the terminal device may perform transmission of a data packet according to the method described in the foregoing Embodiment 3. A structure of the terminal device may be similar to the structure of the terminal device shown in the foregoing FIG. 13, and the terminal device includes: a memory, a processor, an input apparatus and an output apparatus that are separately connected to a bus.

The memory is configured to store data that is input from the input apparatus, and may further store information such as a file necessary for the processor to process data.

The input apparatus and the output apparatus are ports for the terminal device to communicate with another device, and may further include external devices of the terminal device, such as a display, a keyboard, a mouse and a printer.

In this embodiment, the processor may control the output apparatus to send a data packet or small data transmission indication information to a network device; and the input apparatus receives first indication information that is returned by the network device according to a condition on which a small data packet transmission mechanism is used, where the first indication information is used for indicating whether the terminal device can transmit the data packet by using the small data packet transmission mechanism.

The condition on which the small data packet transmission mechanism is used includes but is not limited to any one or more of the following: a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information.

If the condition acquired by the processor is that the data packet conforms to the pre-configured attribute information, the pre-configured attribute information includes at least one of a source IP address, a source port, a destination IP address, a destination port and a transport layer protocol number of the data packet.

The small data packet transmission mechanism includes but is not limited to any one of the following first transmission manners: a transmission manner in which a data packet is transmitted by using radio bearer signaling; a transmission manner in which a terminal device is kept in a connected state; a transmission manner in which a data packet is transmitted by using a public radio bearer configured by a network device; a manner in which a terminal device transmits a data packet after disassembling the data packet into short messages; and a transmission manner in which some pieces of signaling in a process of transmitting a data packet between a terminal device and a network device are merged for transmission. The processor may control the input apparatus and the output apparatus to transmit the data packet according to the first indication information.

It should be noted that, in this embodiment of the present invention, the terminal device may first transmit the data packet by using the small data packet transmission mechanism by default. Specifically, the processor of the terminal device may control the output apparatus to send a radio resource control connection request message to the network device to initiate an RRC connection, where the radio resource control connection request message carries the small data transmission indication information; and when the input apparatus receives a radio resource control connection reject message, where the radio resource control connection reject message carries the first indication information, and the first indication information is used for indicating that the terminal device cannot transmit the data packet by using the small data packet transmission mechanism, the processor controls the input apparatus and the output apparatus to transmit the data packet in another manner such as a second transmission manner, which is specifically shown in a flowchart shown in FIG. 6, and details are not repeated herein; or when the input apparatus receives a radio resource control connection setup message, so as to instruct the terminal device to transmits the data packet in a second transmission manner, the processor controls the input apparatus and the output apparatus to continue to perform the RRC connection process, and transmit the data packet in the second transmission manner.

In another case, the terminal device may first transmit the data packet by using the small data packet transmission mechanism by default. Specifically, the processor of the terminal device may control the output apparatus to initiate an RRC connection; and when the input apparatus receives an RRC connection setup message sent by the network device, the processor may control the output apparatus to send a radio resource control connection setup complete message to the network device, where the radio resource control connection setup complete message carries the data packet; or when the input apparatus receives a radio resource control connection release message, where the radio resource control connection release message carries the first indication information, and the first indication information is used for indicating that the terminal device cannot transmit the data packet by using the small data packet transmission mechanism, the processor controls the input apparatus and the output apparatus to transmit the data packet in another manner such as a second transmission manner, which is specifically shown in a flowchart shown in FIG. 6, and details are not repeated herein.

An embodiment of the present invention further provides a data packet transmission system, including the terminal device described in Device Embodiment 1 of the present invention and the network device described in Device Embodiment 3 of the present invention.

An embodiment of the present invention further provides a data packet transmission system, including the terminal device described in Device Embodiment 2 of the present invention and the network device described in Device Embodiment 4 of the present invention.

An embodiment of the present invention further provides a data packet transmission system, including the terminal device described in Device Embodiment 7 of the present invention and the network device described in Device Embodiment 5 of the present invention.

An embodiment of the present invention further provides a data packet transmission system that may specifically include the terminal device described in Device Embodiment 8 of the present invention and the network device described in Device Embodiment 6 of the present invention.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

The foregoing introduces in detail the data packet transmission method and system, the terminal device and the network device that are provided in the embodiments of the present invention. In this specification, specific examples are used to describe the principle and implementation manners of the present invention, and the description of the embodiments is only intended to help understand the method and core idea of the present invention. Moreover, a person of ordinary skill in the art may, based on the idea of the present invention, make modifications with respect to the specific implementation manners and the application scope.

## Claims

1. A data packet transmission method, comprising:
receiving (201), by a network device, a data packet or small data transmission indication information that is sent by a terminal device;
determining (202), by the network device, whether the terminal device can transmit the data packet according to a small data packet transmission mechanism; and
sending (203), by the network device, first indication information used for indicating whether the terminal device can transmit the data packet by using the small data packet transmission mechanism;
wherein the determining whether the terminal device can transmit the data packet according to a small data packet transmission mechanism comprises: determining, according to a condition on which the small data packet transmission mechanism is used, whether the terminal device can transmit the data packet by using the small data packet transmission mechanism,
wherein the condition comprises any one or more of the following:
a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the receiving a data packet or small data transmission indication information that is sent by a terminal device comprises: receiving a radio resource control connection request message sent by the terminal device, wherein the radio resource control connection request message carries the small data transmission indication information; and **characterised by** if it is determined that the terminal device cannot transmit the data packet by using the small data packet transmission mechanism, the sending first indication information used for indicating whether the terminal device can transmit the data packet by using the small data packet transmission mechanism comprises: sending a radio resource control connection setup message, so as to instruct the terminal device to transmit the data packet in a second transmission manner.

2. The method according to claim 1, wherein the pre-configured attribute information comprises at least one of a source IP address, a source port, a destination IP address, a destination port and a transport layer protocol number of the data packet.

3. A data packet transmission method, comprising:
sending (301), by a terminal device, a data packet or small data transmission indication information to a network device; and
receiving (302), by the terminal device, first indication information that is returned by the network device according to a condition on which the data packet is transmitted by using a small data packet transmission mechanism, and transmitting the data packet according to the first indication information, wherein the first indication information is used for indicating whether the terminal device can transmit the data packet by using the small data packet transmission mechanism,
wherein the condition comprises any one or more of the following:
a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
and wherein the sending a data packet or small data transmission indication information to a network device comprises: sending a radio resource control connection request message to the network device, wherein the radio resource control connection request message carries the small data transmission indication information; and **characterised by** if it is determined that the terminal device cannot transmit the data packet by using the small data packet transmission mechanism, the receiving first indication information used for indicating whether the terminal device can transmit the data packet by using the small data packet transmission mechanism comprises: receiving a radio resource control connection setup message, so as to instruct the terminal device to transmit the data packet in a second transmission manner.

4. The method according to claim 3, wherein the pre-configured attribute information comprises at least one of a source IP address, a source port, a destination IP address, a destination port and a transport layer protocol number of the data packet.

5. A network device, comprising:
a receiving unit (30), configured to receive a data packet or small data transmission indication information that is sent by a terminal device;
a transmission determining unit (31), configured to determine whether the terminal device can transmit the data packet according to a small data packet transmission mechanism; and
a first indication sending unit (32), configured to send, according to a determining result of the transmission determining unit (31), first indication information used for indicating whether the terminal device can transmit the data packet by using the small data packet transmission mechanism;
wherein the transmission determining unit (31) is specifically configured to determine, in the following manner, whether the terminal device can transmit the data packet by using the small data packet transmission mechanism: determining, according to a condition on which the small data packet transmission mechanism is used, whether the terminal device can transmit the data packet by using the small data packet transmission mechanism,
wherein the condition comprises any one or more of the following:
a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the receiving unit (30) is specifically configured to receive, in the following manner, the small data transmission indication information sent by the terminal device: receiving a radio resource control connection request message sent by the terminal device, wherein the radio resource control connection request message carries the small data transmission indication information; and
**characterised by** the first indication sending unit (32) is specifically configured to send, in the following manner, the first indication information used for indicating whether the terminal device can transmit the data packet by using the small data packet transmission mechanism: if the transmission determining unit (31) determines that the terminal cannot transmit the data packet by using the small data packet transmission mechanism, sending a radio resource control connection setup message, so as to instruct the terminal device to transmit the data packet in a second transmission manner.

6. The network device according to claim 5, wherein the pre-configured attribute information comprises at least one of a source IP address, a source port, a destination IP address, a destination port and a transport layer protocol number of the data packet.

7. A terminal device, comprising:
a sending unit (50), configured to send a data packet or small data transmission indication information to a network device;
a first indication receiving unit (51), configured to receive first indication information that is returned by the network device according to a condition on which a small data packet transmission mechanism is used, wherein the first indication information is used for indicating whether the terminal device can transmit the data packet by using the small data packet transmission mechanism; and
a transmission unit (52), configured to transmit the data packet according to the first indication information received by the first indication receiving unit (51),
wherein the condition comprises any one or more of the following:
a data amount of the data packet is less than a first threshold; transmission of the data packet is within a pre-configured time; within a sliding time window, a total data amount of data packets that have been transmitted by the terminal device by using the small data packet transmission mechanism does not exceed a second threshold; an application class of the data packet is a pre-configured application class; the terminal device is of a pre-configured access class; and the data packet conforms to pre-configured attribute information;
wherein the sending unit (50) is specifically configured to send the data packet or the small data transmission indication information to the network device in the following manner: sending a radio resource control connection request message to the network device, wherein the radio resource control connection request message carries the small data transmission indication information;
**characterised by** the first indication receiving unit (51) is specifically configured to receive the first indication information in the following manner: if it is determined that the terminal cannot transmit the data packet by using the small data packet transmission mechanism, receiving a radio resource control connection setup message, so as to instruct the terminal device to transmit the data packet in a second transmission manner.

## Patentansprüche

1. Datenpaketübertragungsverfahren, umfassend:
Empfangen (201), durch eine Netzwerkvorrichtung, einer Datenpaket- oder Kleindaten-Übertragungsanzeigeinformation, die von einer Endgerätevorrichtung gesendet wird;
Bestimmen (202), durch die Netzwerkvorrichtung, ob die Endgerätevorrichtung das Datenpaket gemäß einem Übertragungsmechanismus für kleine Datenpakete übertragen kann; und
Senden (203), durch die Netzwerkvorrichtung, einer ersten Anzeigeinformation, die zum Anzeigen verwendet wird, ob die Endgerätevorrichtung das Datenpaket unter Verwendung des Übertragungsmechanismus für kleine Datenpakete übertragen kann;
wobei das Bestimmen, ob die Endgerätevorrichtung das Datenpaket gemäß einem Übertragungsmechanismus für kleine Datenpakete übertragen kann, umfasst: Bestimmen, gemäß einer Bedingung, unter der der Übertragungsmechanismus für kleine Datenpakete verwendet wird, ob die Endgerätevorrichtung das Datenpaket unter Verwendung des Übertragungsmechanismus für kleine Datenpakete übertragen kann, wobei die Bedingung eines oder mehrere der Folgenden umfasst:
eine Datenmenge des Datenpakets ist kleiner als ein erster Schwellenwert; die Übertragung des Datenpakets erfolgt innerhalb einer vorkonfigurierten Zeit; innerhalb eines gleitenden Zeitfensters überschreitet eine Gesamtdatenmenge von Datenpaketen, die von der Endgerätevorrichtung unter Verwendung des Übertragungsmechanismus für kleine Datenpakete übertragen wurden, keinen zweiten Schwellenwert; eine Anwendungsklasse des Datenpakets ist eine vorkonfigurierte Anwendungsklasse; die Endgerätevorrichtung weist eine vorkonfigurierte Zugriffsklasse auf; und das Datenpaket entspricht einer vorkonfigurierten Attributinformation;
wobei das Empfangen einer Datenpaket- oder Kleindaten-Übertragungsanzeigeinformation, die von einer Endgerätevorrichtung gesendet wird, umfasst: Empfangen einer von der Endgerätevorrichtung gesendeten Funkressourcensteuerungs-Verbindungsanforderungsnachricht, wobei die Funkressourcensteuerungs-Verbindungsanforderungsnachricht die Kleindaten-Übertragungsanzeigeinformation trägt; und
durch Folgendes gekennzeichnet:
wenn bestimmt wird, dass die Endgerätevorrichtung das Datenpaket nicht unter Verwendung des Übertragungsmechanismus für kleine Datenpakete übertragen kann, umfasst das Senden einer ersten Anzeigeinformation, die zum Anzeigen verwendet wird, ob die Endgerätevorrichtung das Datenpaket unter Verwendung des Übertragungsmechanismus für kleine Datenpakete senden kann: Senden einer Funkressourcensteuerungs-Verbindungsaufbaunachricht, um so die Endgerätevorrichtung anzuweisen, das Datenpaket auf eine zweite Übertragungsart zu übertragen.

2. Verfahren nach Anspruch 1, wobei die vorkonfigurierte Attributinformation eine Quell-IP-Adresse, einen Quellport, eine Ziel-IP-Adresse, einen Zielport und/oder eine Transportschichtprotokollnummer des Datenpakets umfasst.

3. Datenpaketübertragungsverfahren, umfassend:
Senden (301), durch eine Endgerätevorrichtung, einer Datenpaket- oder Kleindaten-Übertragungsanzeigeinformation an eine Netzwerkvorrichtung; und
Empfangen (302), durch die Endgerätevorrichtung, einer ersten Anzeigeinformation, die von der Netzwerkvorrichtung gemäß einer Bedingung, unter der das Datenpaket unter Verwendung eines Übertragungsmechanismus für kleine Datenpakete übertragen wird, und Übertragen des Datenpakets gemäß der ersten Anzeigeinformation, wobei die erste Anzeigeinformation verwendet wird, um anzuzeigen, ob die Endgerätevorrichtung das Datenpaket unter Verwendung des Übertragungsmechanismus für kleine Datenpakete übertragen kann,
wobei die Bedingung eines oder mehrere der Folgenden umfasst:
eine Datenmenge des Datenpakets ist kleiner als ein erster Schwellenwert; die Übertragung des Datenpakets erfolgt innerhalb einer vorkonfigurierten Zeit; innerhalb eines gleitenden Zeitfensters überschreitet eine Gesamtdatenmenge von Datenpaketen, die von der Endgerätevorrichtung unter Verwendung des Übertragungsmechanismus für kleine Datenpakete übertragen wurden, keinen zweiten Schwellenwert; eine Anwendungsklasse des Datenpakets ist eine vorkonfigurierte Anwendungsklasse; die Endgerätevorrichtung weist eine vorkonfigurierte Zugriffsklasse auf; und das Datenpaket entspricht einer vorkonfigurierten Attributinformation;
und wobei das Senden eines Datenpakets oder einer Kleindaten-Übertragungsanzeigeinformation an eine Netzwerkvorrichtung umfasst: Senden einer Funkressourcensteuerungs-Verbindungsanforderungsnachricht an die Netzwerkvorrichtung, wobei die Funkressourcensteuerungs-Verbindungsanforderungsnachricht die Kleindaten-Übertragungsanzeigeinformation trägt; und
durch Folgendes gekennzeichnet:
wenn bestimmt wird, dass die Endgerätevorrichtung das Datenpaket nicht unter Verwendung des Übertragungsmechanismus für kleine Datenpakete übertragen kann, umfasst die empfangende erste Anzeigeinformation, die zum Anzeigen verwendet wird, ob die Endgerätevorrichtung das Datenpaket unter Verwendung des Übertragungsmechanismus für kleine Datenpakete senden kann: Empfangen einer Funkressourcensteuerungs-Verbindungsaufbaunachricht, um so die Endgerätevorrichtung anzuweisen, das Datenpaket auf eine zweite Übertragungsart zu übertragen.

4. Verfahren nach Anspruch 3, wobei die vorkonfigurierte Attributinformation mindestens eine Quell-IP-Adresse, einen Quellport, eine Ziel-IP-Adresse, einen Zielport und eine Transportschichtprotokollnummer des Datenpakets umfasst.

5. Netzwerkvorrichtung, umfassend:
eine Empfangseinheit (30), die konfiguriert ist, um eine Datenpaket- oder Kleindaten-Übertragungsanzeigeinformation zu empfangen, die von einer Endgerätevorrichtung gesendet wird;
eine Übertragungsbestimmungseinheit (31), die konfiguriert ist, um zu bestimmen, ob die Endgerätevorrichtung das Datenpaket gemäß einem Übertragungsmechanismus für kleine Datenpakete übertragen kann; und
eine erste Anzeigesendeeinheit (32), die konfiguriert ist, gemäß einem Bestimmungsergebnis der Übertragungsbestimmungseinheit (31) eine erste Anzeigeinformation zu senden, die zum Anzeigen verwendet wird, ob die Endgerätevorrichtung das Datenpaket unter Verwendung des Übertragungsmechanismus für kleine Datenpakete übertragen kann;
wobei die Übertragungsbestimmungseinheit (31) insbesondere konfiguriert ist, um in der folgenden Weise zu bestimmen, ob die Endgerätevorrichtung das Datenpaket unter Verwendung des Übertragungsmechanismus für kleine Datenpakete übertragen kann: Bestimmen, gemäß einer Bedingung, unter der der Übertragungsmechanismus für kleine Datenpakete verwendet wird, ob die Endgerätevorrichtung das Datenpaket unter Verwendung des Übertragungsmechanismus für kleine Datenpakete übertragen kann, wobei die Bedingung eines oder mehrere der Folgenden umfasst:
eine Datenmenge des Datenpakets ist kleiner als ein erster Schwellenwert; die Übertragung des Datenpakets erfolgt innerhalb einer vorkonfigurierten Zeit; innerhalb eines gleitenden Zeitfensters überschreitet eine Gesamtdatenmenge von Datenpaketen, die von der Endgerätevorrichtung unter Verwendung des Übertragungsmechanismus für kleine Datenpakete übertragen wurden, keinen zweiten Schwellenwert; eine Anwendungsklasse des Datenpakets ist eine vorkonfigurierte Anwendungsklasse; die Endgerätevorrichtung weist eine vorkonfigurierte Zugriffsklasse auf; und das Datenpaket entspricht einer vorkonfigurierten Attributinformation;
wobei die Empfangseinheit (30) insbesondere konfiguriert ist, um in der folgenden Weise die Kleindaten-Übertragungsanzeigeinformation zu empfangen, die durch die Endgerätevorrichtung gesendet wird: Empfangen einer von der Endgerätevorrichtung gesendeten Funkressourcensteuerungs-Verbindungsanforderungsnachricht, wobei die Funkressourcensteuerungs-Verbindungsanforderungsnachricht die Kleindaten-Übertragungsanzeigeinformation trägt; und
durch Folgendes gekennzeichnet:
die erste Anzeigesendeeinheit (32) ist insbesondere konfiguriert, um in der folgenden Weise die erste Anzeigeinformation zu senden, die zum Anzeigen verwendet wird, ob die Endgerätevorrichtung das Datenpaket unter Verwendung des Übertragungsmechanismus für kleine Datenpakete übertragen kann; wenn die Übertragungsbestimmungseinheit (31) bestimmt, dass die Endgerätevorrichtung das Datenpaket unter Verwendung des Übertragungsmechanismus für kleine Datenpakete nicht übertragen kann, Senden einer Funkressourcensteuerungs-Verbindungsaufbaunachricht, um die Endgerätevorrichtung anzuweisen, das Datenpaket auf eine zweite Übertragungsart zu übertragen.

6. Netzwerkvorrichtung nach Anspruch 5, wobei die vorkonfigurierte Attributinformation mindestens eine Quell-IP-Adresse, einen Quellport, eine Ziel-IP-Adresse, einen Zielport und eine Transportschichtprotokollnummer des Datenpakets umfasst.

7. Endgerätevorrichtung, umfassend
eine Sendeeinheit (50), die konfiguriert ist, um eine Datenpaket- oder Kleindaten-Übertragungsanzeigeinformation an eine Netzwerkvorrichtung zu senden;
eine erste Anzeigenempfangseinheit (51), die konfiguriert ist, um eine erste Anzeigeinformation, die von der Netzwerkvorrichtung gemäß einer Bedingung zurückgegeben wird, unter der ein Übertragungsmechanismus für kleine Datenpakete verwendet wird, wobei die erste Anzeigeinformation zum Anzeigen verwendet wird, ob die Endgerätevorrichtung das Datenpaket unter Verwendung des Übertragungsmechanismus für kleine Datenpakete übertragen kann; und
eine Übertragungseinheit (52), die konfiguriert ist, um das Datenpaket gemäß der ersten Anzeigeinformation zu senden, die von der ersten Anzeigeempfangseinheit (51) empfangen wird,
wobei die Bedingung eines oder mehrere der Folgenden umfasst:
eine Datenmenge des Datenpakets ist kleiner als ein erster Schwellenwert; die Übertragung des Datenpakets erfolgt innerhalb einer vorkonfigurierten Zeit; innerhalb eines gleitenden Zeitfensters überschreitet eine Gesamtdatenmenge von Datenpaketen, die von der Endgerätevorrichtung unter Verwendung des Übertragungsmechanismus für kleine Datenpakete übertragen wurden, keinen zweiten Schwellenwert; eine Anwendungsklasse des Datenpakets ist eine vorkonfigurierte Anwendungsklasse; die Endgerätevorrichtung weist eine vorkonfigurierte Zugriffsklasse auf; und das Datenpaket entspricht einer vorkonfigurierten Attributinformation;
wobei die Sendeeinheit (50) insbesondere konfiguriert ist, um das Datenpaket oder die Kleindaten-Übertragungsanzeigeinformation an die Netzwerkvorrichtung in der folgenden Weise zu senden: Senden einer Funkressourcensteuerungs-Verbindungsanforderungsnachricht an die Netzwerkvorrichtung,
wobei die Funkressourcensteuerungs-Verbindungsanforderungsnachricht die Kleindaten-Übertragungsanzeigeinformation trägt;
durch Folgendes gekennzeichnet:
die erste Anzeigeempfangseinheit (51) ist insbesondere konfiguriert, um die erste Anzeigeinformation in der folgenden Weise zu empfangen: wenn bestimmt wird, dass die Endgerätevorrichtung das Datenpaket unter Verwendung des Übertragungsmechanismus für kleine Datenpakete nicht übertragen kann, Empfangen einer Funkressourcensteuerungs-Verbindungsaufbaunachricht, um die Endgerätevorrichtung anzuweisen, das Datenpaket auf eine zweite Übertragungsart zu übertragen.

## Revendications

1. Procédé de transmission de paquets de données, consistant à :
recevoir (201), par un dispositif de réseau, un paquet de données ou une information d'indication de transmission de petites données envoyé(e) par un dispositif terminal ;
déterminer (202), par le dispositif de réseau, si le dispositif terminal peut transmettre le paquet de données selon un mécanisme de transmission de petit paquet de données ; et
envoyer (203), par le dispositif de réseau, une première information d'indication utilisée pour indiquer si le dispositif terminal peut transmettre le paquet de données au moyen du mécanisme de transmission de petit paquet de données ;
la détermination de si le dispositif terminal peut transmettre le paquet de données selon un mécanisme de transmission de petit paquet de données consistant à : déterminer, selon une condition d'utilisation du mécanisme de transmission de petit paquet de données, si le dispositif terminal peut transmettre le paquet de données au moyen du mécanisme de transmission de petit paquet de données,
la condition comprenant un ou plusieurs critères quelconques parmi les critères suivants :
une quantité de données du paquet de données est inférieure à un premier seuil ; une transmission du paquet de données s'effectue dans une période de temps préconfigurée ; dans une fenêtre de temps glissante, une quantité de données totale de paquets de données transmis par le dispositif terminal au moyen du mécanisme de transmission de petit paquet de données ne dépasse pas un second seuil ; une classe d'application du paquet de données est une classe d'application préconfigurée ; le dispositif terminal appartient à une classe d'accès préconfigurée ; et le paquet de données est conforme à une information d'attribut préconfigurée ;
la réception d'un paquet de données ou d'une information d'indication de transmission de petites données envoyé(e) par un dispositif terminal consistant à : recevoir un message de demande de connexion par contrôle des ressources radio envoyé par le dispositif terminal, le message de demande de connexion par contrôle des ressources radio transportant l'information d'indication de transmission de petites données ; et
le procédé étant **caractérisé en ce que** :
s'il est déterminé que le dispositif terminal ne peut pas transmettre le paquet de données au moyen du mécanisme de transmission de petits paquets de données, l'envoi de la première information d'indication utilisée pour indiquer si le dispositif terminal peut transmettre le paquet de données au moyen du mécanisme de transmission de petits paquets de données consiste à : envoyer un message d'établissement de connexion par contrôle des ressources radio de manière à donner l'instruction au dispositif terminal de transmettre le paquet de données selon une seconde manière de transmission.

2. Procédé selon la revendication 1, dans lequel l'information d'attribut préconfigurée comprend au moins une information parmi une adresse IP source, un port source, une adresse IP de destination, un port de destination et un numéro de protocole de couche transport du paquet de données.

3. Procédé de transmission de paquets de données, consistant à :
envoyer (301), par un dispositif terminal, un paquet de données ou une information d'indication de transmission de petites données à un dispositif de réseau ; et
recevoir (302), par le dispositif terminal, une première information d'indication renvoyée par le dispositif de réseau selon une condition de transmission du paquet de données au moyen d'un mécanisme de transmission de petits paquets de données, et transmettre le paquet de données selon la première information d'indication, la première information d'indication étant utilisée pour indiquer si le dispositif terminal peut transmettre le paquet de données au moyen du mécanisme de transmission de petits paquets de données,
la condition comprenant un ou plusieurs critères quelconques parmi les critères suivants :
une quantité de données du paquet de données est inférieure à un premier seuil ; une transmission du paquet de données s'effectue dans une période de temps préconfigurée ; dans une fenêtre de temps glissante, une quantité de données totale de paquets de données transmis par le dispositif terminal au moyen du mécanisme de transmission de petit paquet de données ne dépasse pas un second seuil ; une classe d'application du paquet de données est une classe d'application préconfigurée ; le dispositif terminal appartient à une classe d'accès préconfigurée ; et le paquet de données est conforme à une information d'attribut préconfigurée ;
et dans lequel l'envoi d'un paquet de données ou d'une information d'indication de transmission de petites données à un dispositif de réseau consiste à : envoyer un message de demande de connexion par contrôle des ressources radio au dispositif de réseau, le message de demande de connexion par contrôle des ressources radio transportant l'information d'indication de transmission de petites données ; et
le procédé étant **caractérisé en ce que** :
s'il est déterminé que le dispositif terminal ne peut pas transmettre le paquet de données au moyen du mécanisme de transmission de petits paquets de données, la réception de la première information d'indication utilisée pour indiquer si le dispositif terminal peut transmettre le paquet de données au moyen du mécanisme de transmission de petits paquets de données consiste à : recevoir un message d'établissement de connexion par contrôle des ressources radio de manière à donner l'instruction au dispositif terminal de transmettre le paquet de données selon une seconde manière de transmission.

4. Procédé selon la revendication 3, dans lequel l'information d'attribut préconfigurée comprend au moins une information parmi une adresse IP source, un port source, une adresse IP de destination, un port de destination et un numéro de protocole de couche transport du paquet de données.

5. Dispositif de réseau, comprenant :
une unité de réception (30), conçue pour recevoir un paquet de données ou une information d'indication de transmission de petites données envoyé(e) par un dispositif terminal ;
une unité de détermination de transmission (31), conçue pour déterminer si le dispositif terminal peut transmettre le paquet de données selon un mécanisme de transmission de petit paquet de données ; et
une première unité d'envoi d'indication (32), conçue pour envoyer, selon un résultat de détermination de l'unité de détermination de transmission (31), une première information d'indication utilisée pour indiquer si le dispositif terminal peut transmettre le paquet de données au moyen du mécanisme de transmission de petit paquet de données ;
l'unité de détermination de transmission (31) étant spécifiquement conçue pour déterminer, de la manière suivante, si le dispositif terminal peut transmettre le paquet de données au moyen du mécanisme de transmission de petit paquet de données : déterminer, selon une condition d'utilisation du mécanisme de transmission de petit paquet de données, si le dispositif terminal peut transmettre le paquet de données au moyen du mécanisme de transmission de petit paquet de données,
la condition comprenant un ou plusieurs critères quelconques parmi les critères suivants :
une quantité de données du paquet de données est inférieure à un premier seuil ; une transmission du paquet de données s'effectue dans une période de temps préconfigurée ; dans une fenêtre de temps glissante, une quantité de données totale de paquets de données transmis par le dispositif terminal au moyen du mécanisme de transmission de petit paquet de données ne dépasse pas un second seuil ; une classe d'application du paquet de données est une classe d'application préconfigurée ; le dispositif terminal appartient à une classe d'accès préconfigurée ; et le paquet de données est conforme à une information d'attribut préconfigurée ;
et l'unité de réception (30) étant spécifiquement conçue pour recevoir, de la manière suivante, l'information d'indication de transmission de petites données envoyée par le dispositif terminal : recevoir un message de demande de connexion par contrôle des ressources radio envoyé par le dispositif terminal, le message de demande de connexion par contrôle des ressources radio transportant l'information d'indication de transmission de petites données ; et
le dispositif de réseau étant **caractérisé en ce que** :
la première unité d'envoi d'indication (32) est spécifiquement conçue pour envoyer, de la manière suivante, la première information d'indication utilisée pour indiquer si le dispositif terminal peut transmettre le paquet de données au moyen du mécanisme de transmission de petits paquets de données : si l'unité de détermination de transmission (31) détermine que le terminal ne peut pas transmettre le paquet de données au moyen du mécanisme de transmission de petits paquets de données, envoyer un message d'établissement de connexion par contrôle des ressources radio de manière à donner l'instruction au dispositif terminal de transmettre le paquet de données selon une seconde manière de transmission.

6. Dispositif de réseau selon la revendication 5, dans lequel l'information d'attribut préconfigurée comprend au moins une information parmi une adresse IP source, un port source, une adresse IP de destination, un port de destination et un numéro de protocole de couche transport du paquet de données.

7. Dispositif terminal, comprenant :
une unité d'envoi (50), conçue pour envoyer un paquet de données ou une information d'indication de transmission de petites données à un dispositif de réseau ;
une première unité de réception d'indication (51), conçue pour recevoir une première information d'indication renvoyée par le dispositif de réseau selon une condition d'utilisation d'un mécanisme de transmission de petits paquets de données, la première information d'indication étant utilisée pour indiquer si le dispositif terminal peut transmettre le paquet de données au moyen du mécanisme de transmission de petits paquets de données ; et
une unité de transmission (52), conçue pour transmettre le paquet de données selon la première information d'indication reçue par la première unité de réception d'indication (51),
la condition comprenant un ou plusieurs critères quelconques parmi les critères suivants :
une quantité de données du paquet de données est inférieure à un premier seuil ; une transmission du paquet de données s'effectue dans une période de temps préconfigurée ; dans une fenêtre de temps glissante, une quantité de données totale de paquets de données transmis par le dispositif terminal au moyen du mécanisme de transmission de petit paquet de données ne dépasse pas un second seuil ; une classe d'application du paquet de données est une classe d'application préconfigurée ; le dispositif terminal appartient à une classe d'accès préconfigurée ; et le paquet de données est conforme à une information d'attribut préconfigurée ;
l'unité d'envoi (50) étant spécifiquement conçue pour envoyer le paquet de données ou l'information d'indication de transmission de petites données au dispositif de réseau de la manière suivante : envoyer un message de demande de connexion par contrôle des ressources radio au dispositif de réseau, le message de demande de connexion par contrôle des ressources radio transportant l'information d'indication de transmission de petites données ;
le dispositif terminal étant **caractérisé en ce que** :
la première unité de réception d'indication (51) est spécifiquement conçue pour recevoir la première information d'indication de la manière suivante : s'il est déterminé que le terminal ne peut pas transmettre le paquet de données au moyen du mécanisme de transmission de petits paquets de données, recevoir un message d'établissement de connexion par contrôle des ressources radio de manière à donner l'instruction au dispositif terminal de transmettre le paquet de données selon une seconde manière de transmission.
